# EUROPÄISCHE PATENTSCHRIFT

(11) **EP 4 193 091 B1**
(45) Veröffentlichungstag und Bekanntmachung des Hinweises auf die Patenterteilung: **09.10.2024**
(21) Anmeldenummer: 21769630.1
(22) Anmeldetag: 09.08.2021
(51) Int. Cl.: F23G 7/00, C02F 11/13, C02F 11/14, C10B 53/00

(54) **VERFAHREN SOWIE BEHANDLUNGSANLAGE ZUR PHYSIKALISCHEN UND THERMO-CHEMISCHEN BEHANDLUNG VON BIOMASSE**
METHOD AND TREATMENT FACILITY FOR PHYSICAL AND THERMOCHEMICAL TREATMENT OF BIOMASS
PROCÉDÉ ET INSTALLATION DE TRAITEMENT POUR RÉALISER LE TRAITEMENT PHYSIQUE ET THERMOCHIMIQUE DE BIOMASSE

(30) Priorität: 10.08.2020 AT 506702020; 22.12.2020 AT 511292020
(43) Veröffentlichungstag der Anmeldung: 14.06.2023
(73) Patentinhaber: Next Generation Elements GmbH, 4101 Feldkirchen an der Donau (AT)
(72) Erfinder: HACKL, Andreas, 4810 Gmunden (AT)
(74) Vertreter: Burger, Hannes
(86) Internationale Anmeldenummer: PCT/AT2021/060276
(87) Internationale Veröffentlichungsnummer: WO 2022/032317

(56) Entgegenhaltungen:
- WO-A1-2020/021345
- JP-A- S51 128 147
- US-A1- 2019 169 518

## Beschreibung

Die Erfindung betrifft ein kombiniertes Verfahren zur physikalischen und thermo-chemischen Behandlung von Biomasse, insbesondere von organischen Abfallprodukten wie Schlämme aus Kläranlagen, Biogasanlagen, Schlachtbetrieben, land- und forstwirtschaftlichen Betrieben, der Tierhaltung, Lebensmittelindustrie, Papierindustrie, der chemischen Industrie. Weiters betrifft die Erfindung auch noch eine Behandlungsanlage, mittels welcher die physikalische und thermo-chemische Behandlung der Biomasse durchgeführt werden kann.

Die DE 10 2008 028 241 A1 beschreibt eine Vorrichtung zur thermo-chemischen Umwandlung von Biomasse in ein Brenngas. Die Vorrichtung besteht dabei aus einem Schneckenreaktor und einem weiteren Reaktor. Im Schneckenreaktor wird die Biomasse unter Luftausschluss getrocknet und pyrolysiert, wobei der dabei entstehende Pyrolysekoks, das Pyrolysegas und Wasserdampf gemeinsam dem weiteren Reaktor zugeleitet werden und dieser unter Ausbildung einer Pyrolysekoksschüttung gefüllt wird. Im weiteren Reaktor findet eine partielle Oxidation durch unterstöchiometrische Zugabe eines Vergasungsmittels, insbesondere Luft, statt. Dabei findet zumindest teilweise eine Aufspaltung der langkettigen Teermoleküle statt. Die Reststoffe werden mittels einer Abzugseinrichtung aus dem weiteren Reaktor unten abgezogen. Um ein Verstopfen von Einlassöffnungen für das Vergasungsmittel und/oder Auslassöffnungen für das Brenngas im Bereich der Reaktorwandung zu verhindern, sind eine Vielzahl von sich in Schwerkraftrichtung zumindest partiell erstreckende Innenraumerweiterungen vorgesehen. Das entstandene Brenngas wird über die eigenen Auslassöffnungen einem Gasfilter und einem Gaskühler zugeleitet. Das aus dem Ausgang des Gaskühlers strömende, gereinigte Brenngas wird dann, beispielsweise einem Gasmotor zugeleitet. Die im Gasmotor entstehende elektrische Energie kann ins Versorgungsnetz eingespeist werden, wobei die ebenfalls entstehende Wärme auch der Beheizung des vorgenannten Schneckenreaktors dienen kann.

Die DE 10 2010 049 339 A1 beschreibt eine Vorrichtung und ein Verfahren für die Trocknung von Gütern in einem Schleuderwellentrockner. Das zu trocknende Gut wird in Durchtrittsrichtung durch den Trockner in aufeinanderfolgend angeordnete und mittels mobiler Trennwände unterteilte Segmente nacheinander weitergefördert. Die zugeleitete Trocknungsluft kann entweder durch im Bereich der Trennwände vorgesehene Verbindungsöffnungen durch die Trocknungskammer hindurchströmen oder jedem der Segmente zugeleitet und auch wieder abgeleitet werden. Zur Trocknung können auch Rauchgase direkt genutzt werden, wobei diese aus einer externen Brennkammer stammen. Dabei kann es sich um einen konventionellen Öl- oder Gas-Brenner handeln. Es kann aber auch ein Biomasse-Brenner für Pellets eingesetzt werden, wie dieser in der DE 203 21 670 U1 beschrieben ist.

US 2019/169518 A1 offenbart ein Verfahren sowie einen Reaktor zur pyrolytischen Behandlung von Biomasse. Zur Behandlung der Biomasse kann selbige optional in Zonen vorgetrocknet, entgast und vorgewärmt werden, und wird sodann in einem Pyrolysereaktor pyrolisiert. Nachfolgend wird der feste Pyrolyserückstand gekühlt und einer Kohlenstoffrückgewinnungszone zugeführt. Das entstandene Pyrolysegas kann dann verbrannt werden, und die hierbei entstehende Wärme zum Beispiel zur Vortrocknung genutzt werden. Hierzu lehrt US 2019/169518 A1 den Einsatz von Wärmetauschern, zum Beispiel mit eingekapselten Umhüllungen versehene Transportvorrichtungen, durch welche Umhüllungen das verbrannte Pyrolysegas zwecks indirekter Vorwärmung der Biomasse geleitet werden kann.

JP S51 128147 A offenbart eine Trocknung von Schlamm oder Jauche durch Zugabe von Öl, Evakuierung und anschließender Zentrifugation zur Trennung fester und flüssiger Bestandteile. Der so erhaltene Schlammkuchen kann verbrannt werden. Weiters offenbart JP S51 128147 A ein Zuführen des aus der Vakuumtrocknung erhaltenen Dampfs in das durch die Verbrennung erhaltene Abgas, wobei hierdurch eine chemische Neutralisation des im Abgas enthaltenen Schwefels erzielbar ist.

WO 2020/021345 A1 offenbart eine Anlage sowie ein Verfahren zur Volumenreduktion von Klärschlamm. Die Anlage umfasst einen Trockner zur Trocknung des Klärschlamms sowie einen Feststoff-Gas-Separator. Weiters umfasst die Anlage einen Heißluftgenerator, welcher mit dem Trockner und dem Feststoff-Gas-Separator verbunden ist. Der Heißluftgenerator ist zur Zufuhr eines Brenngases sowie eines Teils des getrockneten Klärschlamms eingerichtet. Weiters ist der Heißluftgenerator eingerichtet den zugeführten, getrockneten Klärschlamm zu verbrennen, wobei die entstehende Verbrennungswärme zur Herstellung eines Trocknungsgases genutzt wird. Dieses Trocknungsgas wird dem Trockner direkt aus dem Heißluftgenerator zugeführt.

Aufgabe der vorliegenden Erfindung ist es, ein Verfahren sowie eine Behandlungsanlage zur physikalischen und thermo-chemischen Behandlung von Biomasse zur Verfügung zu stellen, mittels dem oder der eine Reduzierung oder Vermeidung von Problemstoffen ohne dem Einsatz von Zusatzmitteln und eine höhere Energieeffizienz beim Betrieb der gesamten Behandlungsanlage möglich ist.

Diese Aufgabe wird durch Verfahren sowie eine Behandlungsanlage gemäß den Ansprüchen gelöst.

Das erfindungsgemäße Verfahren ist zur physikalischen und thermo-chemischen Behandlung von Biomasse, insbesondere von organischen Abfallprodukten in einer Behandlungsanlage vorgesehen. Bei den organischen Abfallprodukten handelt es sich bevorzugt um die unterschiedlichsten Schlämme aus Kläranlagen, Schlachtbetrieben, land- und forstwirtschaftlichen Betrieben, der Tierhaltung, Lebensmittelindustrie, Papierindustrie und der chemischen Industrie. Zur Durchführung des Verfahrens sind folgende Schritte durchzuführen:
- Bereitstellen der zu behandelnden Biomasse,
- Bereitstellen einer Trocknungsvorrichtung,
- Bereitstellen zumindest eines Pyrolyse-Reaktors,
- Bereitstellen zumindest einer Brennvorrichtung,
- Bereitstellen zumindest einer Zumischvorrichtung,
- Zuführen der bereitgestellten und zu behandelnden Biomasse in die Trocknungsvorrichtung, wobei die in der Biomasse enthaltene Feuchtigkeit reduziert und weiters beim Trocknungsvorgang aus der Biomasse Ammoniak (NH₃) freigesetzt wird,
- Abgeben der zu behandelnden Biomasse aus der Trocknungsvorrichtung,
- Zuführen der zu behandelnden Biomasse in den Pyrolyse-Reaktor,
- Pyrolysieren der Biomasse im Pyrolyse-Reaktor und dabei thermische Zersetzung der Biomasse in Pyrolysekoks und Pyrolysegas,
- Abführen des Pyrolysekokses und Ableiten des Pyrolysegases aus dem Pyrolyse-Reaktor,
- Zuleiten des aus dem Pyrolyse-Reaktor abgeleiteten Pyrolysegases in die Brennvorrichtung und Verbrennen des Pyrolysegases unter Bildung eines Rauchgases,
- Ableiten des Rauchgases aus der Brennvorrichtung und Zuleiten des Rauchgases in die Zumischvorrichtung,
- Zudosieren von Sauerstoff (O₂) und/oder zumindest eines Sauerstoff (O₂) enthaltenden Gases zum Rauchgas in der Zumischvorrichtung und Bildung eines Trocknungsgases, welches Trocknungsgas unter anderem Schwefeldioxid (SO₂) und/oder Schwefeltrioxid (SO₃) jeweils in einem gasförmigen Aggregatzustand enthält,
- Ableiten des Trocknungsgases aus der Zumischvorrichtung und Zuleiten des Trocknungsgases in die Trocknungsvorrichtung,
- Hindurchleiten des Trocknungsgases durch die Trocknungsvorrichtung, wobei das im Trocknungsgas unter anderem enthaltene Schwefeldioxid (SO₂) und/oder das Schwefeltrioxid (SO₃) mit dem Ammoniak (NH₃) chemisch zu Ammoniumsulfit ((NH₄)₂SO₃) und/oder Ammoniumsulfat ((NH₄)₂SO₄) reagiert.

Vorteilhaft ist bei den hier gewählten Verfahrensschritten, dass das aus der Brennvorrichtung abgeleitete Rauchgas direkt nach dem Zudosieren von einem gewissen Volumenanteil an Sauerstoff oder einem Sauerstoff enthaltenden Gases als sogenanntes Trocknungsgas der Trocknungsvorrichtung zugeleitet wird. So wird die im Rauchgas enthaltene Wärmeenergie samt dem oder den jeweiligen darin enthaltenen Schwefel-Oxiden in der Trocknungsvorrichtung verwendet. Damit wird die Zugabe zumindest eines eigenen Zusatzstoffes in der Trocknungsvorrichtung vermieden, um den beim Trocknungsvorgang entstehenden oder freigesetzten Ammoniak zu binden, damit dieser nicht gesondert zu behandeln oder zu filtern ist, bevor das Trocknerabgas oder die Trocknerabluft an die Umgebung abgegeben wird. Weiters wird damit aber eine zusammengehörige, kompakte Behandlungsanlage geschaffen, bei welcher keine zusätzlichen Anlagenkomponenten für die Bereitstellung des Trocknungsgases, wie z.B. ein Blockheizkraftwerk oder andere Verbrennungsanlagen, für den Dauerbetrieb erforderlich sind. Bevorzugt erfolgt die Durchführung der Verfahrensschritte in der zuvor angeführten Reihenfolge.

Weiters ist ein Vorgehen vorteilhaft, bei dem das Trocknungsgas in der Zumischvorrichtung auf einen Temperaturwert verbracht wird, der aus einem Temperatur-Wertebereich stammt, dessen untere Grenze 100°C, insbesondere 300°C, und dessen obere Grenze 700 °C, insbesondere 500 °C, beträgt. Damit wird die Möglichkeit geschaffen, das Rauchgas durch die Zudosierung von zumeist kühlerer Umgebungsluft auf jenen Temperaturwert oder Temperatur-Wertebereich zu verbringen, welcher für den Einsatz in der Trocknungsvorrichtung erforderlich ist, um einen ordnungsgemäßen Trocknungsvorgang durchführen zu können.

Eine weitere vorteilhafte Vorgehensweise ist dadurch gekennzeichnet, dass das Trocknungsgas in der Zumischvorrichtung durch das Zudosieren des Sauerstoffs (O₂) und/oder zumindest des den Sauerstoff (O₂) enthaltenden Gases auf einen Sauerstoffgehalt verbracht wird, der aus einem Sauerstoffgehalt-Wertebereich stammt, dessen untere Grenze 6 Vol.%, insbesondere 15 Vol.%, und dessen obere Grenze 20 Vol.%, insbesondere 17 Vol.%, beträgt. Durch die Festlegung, insbesondere die Absenkung, des Sauerstoffgehalts in dem aus der Zumischvorrichtung abgegebenen Trocknungsgas kann in der Trocknungsvorrichtung eine Trocknungsatmosphäre erreicht werden, welche die Gefahr eines Brandes und/oder einer Explosion hintanhält. Bei dem Trocknungsvorgang bilden sich unter anderem Staubpartikel, welche infolge der nicht unerheblich hohen Trocknungstemperatur zu einer Staubexplosion führen können. Damit können gesetzlich vorgeschriebene Vorgaben eingehalten werden, da die Trocknungstemperatur auf einem kritischen Niveau liegt.

Vorteilhaft ist auch eine Verfahrensvariante, bei welcher der Zumischvorrichtung ein aus einem Blockheizkraftwerk stammendes weiteres Rauchgas zugeleitet wird. Damit kann in einer möglichen Kombination eine noch größerer Menge an Trocknungsgas zur Trocknung der Biomasse in der Trocknungsvorrichtung bereitgestellt werden. So kann ein noch besserer oder höherer Trocknungsgrad der Biomasse erzielt werden, um nachfolgend im Pyrolyse-Reaktor eine raschere Behandlung durchführen zu können. Damit kann eine noch bessere Energieeffizienz erzielt werden.

Weiters ist ein Vorgehen vorteilhaft, bei dem das weitere Rauchgas mit einem Temperaturwert der Zumischvorrichtung zugeleitet wird, der aus einem Temperatur-Wertebereich stammt, dessen untere Grenze 100°C, insbesondere 200°C, und dessen obere Grenze 500 °C, insbesondere 300 °C, beträgt. Damit kann in Kombination mit dem aus der Brennvorrichtung zugeleiteten Rauchgas, welches aus der Verbrennung zumindest des Pyrolysegases stammt, einfacher ein vorbestimmtes Temperaturniveau des Trocknungsgases erzielt werden.

Eine weitere vorteilhafte Vorgehensweise ist dadurch gekennzeichnet, dass von dem aus der Brennvorrichtung abgeleiteten Rauchgas eine Teilmenge vor dem Zuleiten in die Zumischvorrichtung abgezweigt wird, diese Teilmenge des Rauchgases durch einen Wärmetauscher hindurchgeleitet und die Rauchgastemperatur reduziert wird und nachfolgend das abgezweigte Rauchgas der Brennvorrichtung zur Verbrennung zugeleitet wird. Damit kann ein gewisses Ausmaß an Wärmeenergie für einen zusätzlichen Erwärmungsvorgang bereitgestellt werden. Darüber hinaus kann so durch die Rückleitung zur Brennvorrichtung und dem Verbrennungsvorgang weitere Wärmeenergie erzeugt werden.

Vorteilhaft ist auch eine Verfahrensvariante, bei welcher Umgebungsluft als das den Sauerstoff (O₂) enthaltende Gas durch den Wärmetauscher hindurchgeleitet und die Temperatur mittels des hindurchgeleiteten Rauchgases erhöht wird und nachfolgend die Umgebungsluft der Zumischvorrichtung zugeleitet und dem Rauchgas zudosiert wird. Damit kann die im abgezweigten Rauchgas enthaltene Wärmeenergie zur Temperierung der Umgebungsluft, welche der Zumischvorrichtung zugeleitet wird, übertragen werden. Weiters kann damit aber auch durch das rückgeleitete Rauchgas eine Temperaturkontrolle in der Brennkammer der Brennvorrichtung durch die Temperaturreduzierung erzielt werden.

Eine andere Vorgehensweise zeichnet sich dadurch aus, wenn der aus dem Pyrolyse-Reaktor abgeführte Pyrolysekoks einer bereitgestellten Koksbehandlungsvorrichtung zugeführt und in der Koksbehandlungsvorrichtung in ein festes, insbesondere rieselfähiges, Rückstandsprodukt und in ein Koksabgas weiter zersetzt wird. Damit kann eine weitere zusätzliche Behandlung der bereits im Pyrolyse-Reaktor behandelten Biomasse durchgeführt werden. So wird eine noch intensivere und umfassendere Behandlung in einem Zweistufenprozess ermöglicht. So kann je nach gewählter Biomasse, insbesondere von organischen Abfallprodukten, eine Rückgewinnung des darin enthaltenen Wertstoffes, insbesondere von Phosphor oder Phosphorverbindungen, Phosphaten, Kalium, Calcium, Magnesium oder dergleichen, noch besser erzielt werden.

Weiters ist ein Vorgehen vorteilhaft, bei dem das Rückstandsprodukt räumlich getrennt vom Koksabgas aus der Koksbehandlungsvorrichtung abgeführt wird. Damit kann ein zusätzliches, in der Brennvorrichtung verwendbares Gas bereitgestellt werden, um so die Energieeffizienz noch zusätzlich zu erhöhen.

Eine weitere vorteilhafte Vorgehensweise ist dadurch gekennzeichnet, dass das aus der Koksbehandlungsvorrichtung abgeleitete Koksabgas der Brennvorrichtung zugeleitet und das Koksabgas in der Brennvorrichtung unter Bildung des Rauchgases verbrannt und aus dieser ebenfalls abgeleitet wird. Damit kann eine noch höhere Wärmeenergie in der Brennvorrichtung bereitgestellt werden.

Vorteilhaft ist auch eine Verfahrensvariante, bei welcher das Pyrolysegas und das Koksabgas voneinander getrennt der Brennvorrichtung zugeleitet werden. Durch die voneinander getrennte Zufuhr des Pyrolysegases und des Koksabgases in die Brennvorrichtung kann so eine noch vollständigere und bessere Verbrennung erzielt werden, wodurch die Wärmeauskopplung zusätzlich entsprechend erhöht werden kann.

Eine andere Vorgehensweise zeichnet sich dadurch aus, wenn das Pyrolysegas und das Koksabgas gemeinsam der Brennvorrichtung zugeleitet werden. Damit kann bereits vor dem Zuleiten der beiden Gase in die Brennvorrichtung eine gewisse Durchmischung erzielt werden.

Eine weitere vorteilhafte Vorgehensweise ist dadurch gekennzeichnet, dass das in der Trocknungsvorrichtung gebildete Ammoniumsulfit ((NH₄)₂SO₃) und/oder das Ammoniumsulfat ((NH₄)₂SO₄) gemeinsam mit der getrockneten Biomasse dem Pyrolyse-Reaktor zugeführt werden oder wird. So kann ein nachfolgender gemeinsamer Behandlungsvorgang im Pyrolyse-Reaktor durchgeführt werden.

Die Aufgabe der Erfindung, nämlich einen physikalischen und thermo-chemischen Behandlungsprozess der Biomasse zur Verfügung zu stellen und dabei eine Reduzierung oder Vermeidung von Problemstoffen ohne dem Einsatz von Zusatzmitteln und eine höhere Energieeffizienz beim Betrieb der gesamten Behandlungsanlage zu ermöglich, wird durch ein weiteres Verfahren gemäß den dort angegebenen Verfahrensschritten gegebenenfalls für sich eigenständig und unabhängig gelöst.

Das weitere Verfahren ist ebenfalls zur physikalischen und thermo-chemischen Behandlung von Biomasse, insbesondere von organischen Abfallprodukten in einer Behandlungsanlage vorgesehen. Bei den organischen Abfallprodukten handelt es sich bevorzugt um die unterschiedlichsten Schlämme aus Kläranlagen, Schlachtbetrieben, land- und forstwirtschaftlichen Betrieben, der Tierhaltung, Lebensmittelindustrie, Papierindustrie und der chemischen Industrie. Zur Durchführung des Verfahrens sind folgende Schritte durchzuführen:
- Bereitstellen der zu behandelnden Biomasse,
- Bereitstellen einer Trocknungsvorrichtung,
- Bereitstellen einer Verbrennungs-Anlageneinheit mit zumindest einem Verbrennungs-Reaktor,
- Bereitstellen zumindest einer Zumischvorrichtung,
- Zuführen der bereitgestellten und zu behandelnden Biomasse in die Trocknungsvorrichtung, wobei die in der Biomasse enthaltene Feuchtigkeit reduziert und weiters beim Trocknungsvorgang aus der Biomasse Ammoniak (NH3) freigesetzt wird,
- Abgeben der zu behandelnden Biomasse aus der Trocknungsvorrichtung,
- Zuführen der zu behandelnden Biomasse in den zumindest einen Verbrennungs-Reaktor,
- Verbrennen der Biomasse im zumindest einen Verbrennungs-Reaktor und dabei oxidative Umsetzung der Biomasse in ein Verbrennungsprodukt und Rauchgas,
- Abführen des Verbrennungsprodukts und Ableiten des Rauchgases aus dem zumindest einen Verbrennungs-Reaktor,
- Zuleiten des Rauchgases in die Zumischvorrichtung,
- Zudosieren von Sauerstoff (O₂) und/oder zumindest eines Sauerstoff (O₂) enthaltenden Gases zum Rauchgas in der Zumischvorrichtung und Bildung eines Trocknungsgases, welches Trocknungsgas unter anderem Schwefeldioxid (SO₂) und/oder Schwefeltrioxid (SO₃) jeweils in einem gasförmigen Aggregatzustand enthält,
- Ableiten des Trocknungsgases aus der Zumischvorrichtung und Zuleiten des Trocknungsgases in die Trocknungsvorrichtung,
- Hindurchleiten des Trocknungsgases durch die Trocknungsvorrichtung, wobei das im Trocknungsgas unter anderem enthaltene Schwefeldioxid (SO₂) und/oder das Schwefeltrioxid (SO₃) mit dem Ammoniak (NH₃) chemisch zu Ammoniumsulfit ((NH4)₂SO₃) und/oder Ammoniumsulfat ((NH₄)2SO₄) reagiert.

Vorteilhaft ist bei den hier gewählten Verfahrensschritten, dass das in der Verbrennungs-Anlageneinheit gebildete und aus der Verbrennungs-Anlageneinheit abgeleitete Rauchgas direkt nach dem Zudosieren von einem gewissen Volumenanteil an Sauerstoff oder einem Sauerstoff enthaltenden Gases als sogenanntes Trocknungsgas der Trocknungsvorrichtung zugeleitet wird. So wird die im Rauchgas enthaltene Wärmeenergie samt dem oder den jeweiligen darin enthaltenen Schwefel-Oxiden in der Trocknungsvorrichtung verwendet. Damit wird auch hier die Zugabe zumindest eines eigenen Zusatzstoffes in der Trocknungsvorrichtung vermieden, um den beim Trocknungsvorgang entstehenden oder freigesetzten Ammoniak zu binden, damit dieser nicht gesondert zu behandeln oder zu filtern ist, bevor das Trocknerabgas oder die Trocknerabluft an die Umgebung abgegeben wird. Weiters wird damit eine zusammengehörige, kompakte Behandlungsanlage geschaffen, bei welcher bevorzugt keine zusätzlichen Anlagenkomponenten für die Bereitstellung des Trocknungsgases, wie z.B. ein Blockheizkraftwerk oder andere Verbrennungsanlagen, für den Dauerbetrieb unbedingt erforderlich sind. Bevorzugt erfolgt die Durchführung der Verfahrensschritte in der zuvor angeführten Reihenfolge.

Weiters ist ein Vorgehen vorteilhaft, bei dem die Verbrennungs-Anlageneinheit aus mehreren Verbrennungs-Reaktoren gebildet wird und dass das jeweils bei der Verbrennung in diesen gebildete Rauchgas der Zumischvorrichtung zugeleitet wird. Damit kann insgesamt der Mengendurchsatz erhöht werden, um nachfolgend an die Trocknungsvorrichtung eine ausreichend hohe Masse oder Menge verbrennen zu können. Damit kann in der Trocknungsvorrichtung mit einem niedrigeren Trockungsgrad das Auslangen gefunden werden.

Eine weitere vorteilhafte Vorgehensweise ist dadurch gekennzeichnet, dass das Trocknungsgas in der Zumischvorrichtung auf einen Temperaturwert verbracht wird, der aus einem Temperatur-Wertebereich stammt, dessen untere Grenze 100°C, insbesondere 300°C, und dessen obere Grenze 700 °C, insbesondere 500 °C, beträgt. Damit wird die Möglichkeit geschaffen, das Rauchgas durch die Zudosierung von zumeist kühlerer Umgebungsluft auf jenen Temperaturwert oder Temperatur-Wertebereich zu verbringen, welcher für den Einsatz in der Trocknungsvorrichtung erforderlich ist, um einen ordnungsgemäßen Trocknungsvorgang durchführen zu können.

Vorteilhaft ist auch eine Verfahrensvariante, bei welcher das Trocknungsgas in der Zumischvorrichtung durch das Zudosieren des Sauerstoffs (O₂) und/oder zumindest des den Sauerstoff (O₂) enthaltenden Gases auf einen Sauerstoffgehalt verbracht wird, der aus einem Sauerstoffgehalt-Wertebereich stammt, dessen untere Grenze 6 Vol.%, insbesondere 15 Vol.%, und dessen obere Grenze 20 Vol.%, insbesondere 17 Vol.%, beträgt. Durch die Festlegung, insbesondere die Absenkung, des Sauerstoffgehalts in dem aus der Zumischvorrichtung abgegebenen Trocknungsgas kann in der Trocknungsvorrichtung eine Trocknungsatmosphäre erreicht werden, welche die Gefahr eines Brandes und/oder einer Explosion hintanhält. Bei dem Trocknungsvorgang bilden sich unter anderem Staubpartikel, welche infolge der nicht unerheblich hohen Trocknungstemperatur zu einer Staubexplosion führen können. Damit können gesetzlich vorgeschriebene Vorgaben eingehalten werden, da die Trocknungstemperatur auf einem kritischen Niveau liegt.

Eine andere Vorgehensweise zeichnet sich dadurch aus, wenn von dem aus der Verbrennungs-Anlageneinheit abgeleiteten Rauchgas eine Teilmenge vor dem Zuleiten in die Zumischvorrichtung abgezweigt wird, diese Teilmenge des Rauchgases durch einen Wärmetauscher hindurchgeleitet und die Rauchgastemperatur reduziert wird und nachfolgend das abgezweigte Rauchgas der Verbrennungs-Anlageneinheit zur Verbrennung zugeleitet wird. Damit kann ein gewisses Ausmaß an Wärmeenergie für einen zusätzlichen Erwärmungsvorgang bereitgestellt werden. Darüber hinaus kann so durch die Rückleitung zur Verbrennungs-Anlageneinheit mit deren zumindest einen Verbrennungs-Reaktor und dem Verbrennungsvorgang weitere Wärmeenergie erzeugt werden.

Weiters ist ein Vorgehen vorteilhaft, bei dem Umgebungsluft als das den Sauerstoff (O₂) enthaltende Gas durch den Wärmetauscher hindurchgeleitet und die Temperatur mittels des hindurchgeleiteten Rauchgases erhöht wird und nachfolgend die Umgebungsluft der Zumischvorrichtung zugeleitet und dem Rauchgas zudosiert wird. Damit kann die im abgezweigten Rauchgas enthaltene Wärmeenergie zur Temperierung der Umgebungsluft, welche der Zumischvorrichtung zugeleitet wird, übertragen werden. Weiters kann damit aber auch durch das rückgeleitete Rauchgas eine Temperaturkontrolle in der oder den Brennkammern der Verbrennungs-Anlageneinheit durch die Temperaturreduzierung erzielt werden.

Schließlich ist eine weitere vorteilhafte Vorgehensweise dadurch gekennzeichnet, dass das in der Trocknungsvorrichtung gebildete Ammoniumsulfit ((NH₄)₂SO₃) und/oder das Ammoniumsulfat ((NH₄)₂SO₄) gemeinsam mit der getrockneten Biomasse der Verbrennungs-Anlageneinheit zugeführt werden oder wird. So kann ein nachfolgender gemeinsamer Behandlungsvorgang in der Verbrennungs-Anlageneinheit durchgeführt werden.

Die Aufgabe der Erfindung, nämlich eine Behandlungsanlage für die Durchführung eines physikalischen und thermo-chemischen Behandlungsprozesses der Biomasse zu schaffen und dabei eine Reduzierung oder Vermeidung von Problemstoffen ohne dem Einsatz von Zusatzmitteln und eine höhere Energieeffizienz beim Betrieb der gesamten Behandlungsanlage zu ermöglich, wird durch die Behandlungsanlage gemäß den dort angegebenen Merkmalen gegebenenfalls für sich eigenständig und unabhängig gelöst.

Die Behandlungsanlage ist insbesondere zur Durchführung des Behandlungsverfahrens der Biomasse und dessen Verbrennung in einer Verbrennungs-Anlageneinheit ausgebildet. Die Behandlungsanlage umfasst
- eine Trocknungsvorrichtung, welche Trocknungsvorrichtung dazu ausgebildet ist, die in der Biomasse enthaltene Feuchtigkeit zu reduzieren, und wobei weiters beim Trocknungsvorgang in der Trocknungsvorrichtung Ammoniak (NH₃) aus der Biomasse freisetzbar ist,
- eine Verbrennungs-Anlageneinheit mit zumindest einem Verbrennungs-Reaktor, welcher zumindest eine Verbrennungs-Reaktor dazu ausgebildet ist, die diesem zugeführte Biomasse zu verbrennen und dabei eine oxidative Umsetzung der Biomasse in ein Verbrennungsprodukt und Rauchgas durchzuführen,
- zumindest eine Zumischvorrichtung, welche Zumischvorrichtung dazu ausgebildet ist, ein Zudosieren von Sauerstoff (O₂) und/oder zumindest eines Sauerstoff (O₂) enthaltenden Gases zu dem der Zumischvorrichtung aus der Verbrennungs-Anlageneinheit zugeleiteten Rauchgas zur Bildung eines Trocknungsgases durchzuführen, wobei das mittels der Zumischvorrichtung gebildete Trocknungsgas unter anderem Schwefeldioxid (SO₂) und/oder Schwefeltrioxid (SO₃) jeweils in einem gasförmigen Aggregatzustand enthält,
- eine Trocknungsgas-Zuleitung, mittels welcher Trocknungsgas-Zuleitung die zumindest eine Zumischvorrichtung mit der Trocknungsvorrichtung in Leitungsverbindung steht und dazu ausgebildet ist, das in der Zumischvorrichtung gebildete Trocknungsgas der Trocknungsvorrichtung zuzuleiten.

Der dadurch erzielte Vorteil liegt darin, dass das in der Verbrennungs-Anlageneinheit gebildete und aus der Verbrennungs-Anlageneinheit abgeleitete Rauchgas direkt nach dem Zudosieren von einem gewissen Volumenanteil an Sauerstoff oder einem Sauerstoff enthaltenden Gases als sogenanntes Trocknungsgas der Trocknungsvorrichtung zuleitbar ist. So wird die im Rauchgas enthaltene Wärmeenergie samt dem oder den jeweiligen darin enthaltenen Schwefel-Oxiden in der Trocknungsvorrichtung verwendet. Damit wird auch hier die Zugabe zumindest eines eigenen Zusatzstoffes in der Trocknungsvorrichtung vermieden, um den beim Trocknungsvorgang entstehenden oder freigesetzten Ammoniak zu binden, damit dieser nicht gesondert zu behandeln oder zu filtern ist, bevor das Trocknerabgas oder die Trocknerabluft an die Umgebung abgegeben wird. Weiters wird damit eine zusammengehörige, kompakte Behandlungsanlage geschaffen, bei welcher bevorzugt keine zusätzlichen Anlagenkomponenten für die Bereitstellung des Trocknungsgases, wie z.B. ein Blockheizkraftwerk oder andere Verbrennungsanlagen, für den Dauerbetrieb unbedingt erforderlich sind.

Weiters kann es vorteilhaft sein, wenn die Verbrennungs-Anlageneinheit mehrere Verbrennungs-Reaktoren umfasst und jeder der Verbrennungs-Reaktoren mit der Zumischvorrichtung in Leitungsverbindung steht. Durch den Einsatz von mehreren Verbrennungs-Reaktoren kann so auch eine größere Menge an Biomasse der Behandlung in einem ansonsten länger erforderlichen Zeitraum zugeführt und behandelt werden.

Eine andere Ausführungsform zeichnet sich dadurch aus, dass der zumindest eine Verbrennungs-Reaktor aus der Gruppe von Drehrohrofen, Wirbelschichtofen, Ofen zur Durchführung einer Staubfeuerung oder einer Zykloidfeuerung oder einem Ofen mit Rostfeuerung, wie einem Treppenofen, gewählt ist. So können die unterschiedlichsten Biomassen deren Verbrennung zugeführt werden und die Behandlungsanlage an die jeweiligen Anforderungen angepasst werden.

Eine weitere mögliche Ausführungsform hat die Merkmale, dass die Behandlungsanlage weiters ein Blockheizkraftwerk umfasst und ein aus dem Blockheizkraftwerk stammendes weiters Rauchgas via eine Zuleitung der Zumischvorrichtung zuleitbar ist. Damit kann die Möglichkeit geschaffen werden, bei Bedarf auch ein weiters Rauchgas für die Zumischvorrichtung bereitzustellen und anschließend in der Trocknungsvorrichtung als gemischtes Trocknungsgas zuleiten zu können.

Zum besseren Verständnis der Erfindung wird diese anhand der nachfolgenden Figur näher erläutert.

Es zeigt in stark vereinfachter, schematischer Darstellung:
- Fig. 1: ein erstes Anlagenschema einer Behandlungsanlage mit angedeuteten Anlagenkomponenten;
- Fig. 2: ein zweites mögliches Anlagenschema einer Behandlungsanlage mit angedeuteten Anlagenkomponenten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

Als weiterer Begriff wird auch noch "wahlweise" verwendet. Darunter wird verstanden, dass dieser Verfahrensschritt grundsätzlich vorhanden ist, jedoch je nach Einsatzbedingungen eingesetzt werden kann, dies jedoch nicht zwingend erfolgen muss.

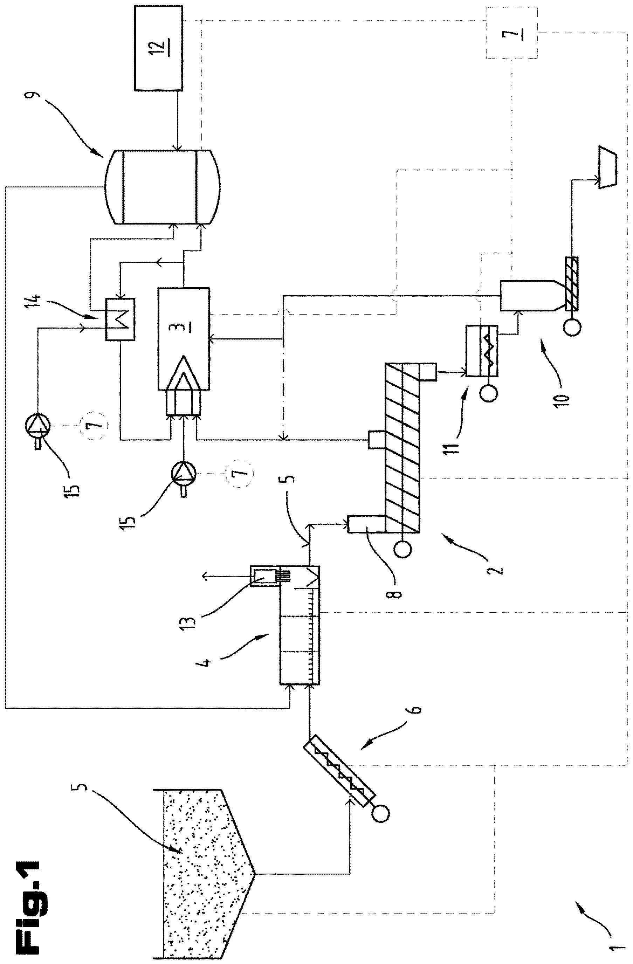

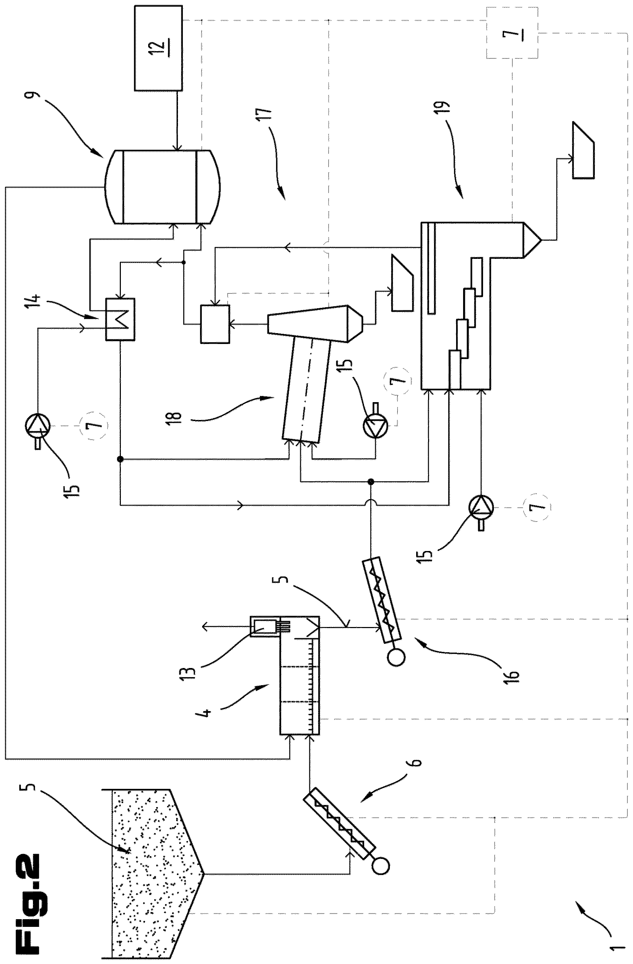

In den beiden Fig. 1 und 2 ist jeweils ein Anlagenschema gezeigt, wobei mittels zueinander unterschiedlicher Anlagenkomponenten jeweils das Rauchgas gebildet werden kann, welches nachfolgend zur Trocknung der zu behandelnden Biomasse eingesetzt wird. Es unterscheiden sich lediglich jene Anlagenkomponenten, mittels welcher das Rauchgas gebildet wird. Aus dem Rauchgas wird nachfolgend das Trocknungsgas gebildet. Die jeweiligen möglichen Anlagenkomponenten sowie Verfahrensschritte werden nachfolgend detailliert beschrieben.

Es ist jeweils ein kombiniertes Verfahren zur physikalischen und thermo-chemischen Behandlung der Biomasse vorgesehen. Unter dem Begriff der thermo-chemischen Behandlung werden sowohl direkte als auch indirekte Verfahren verstanden. Bei den direkten Verfahren erfolgt eine Verbrennung der Biomasse, wobei bei den indirekten Verfahren eine Pyrolyse oder eine Vergasung der Biomasse durchgeführt wird.

Einleitend werden kurz die Unterschiede der möglichen Behandlungsverfahren in Bezug auf den dabei eingesetzten Anteil an Sauerstoff und dem Verbrennungsluft-Verhältnis des Brennstoff-Sauerstoff (Luft)-Gemisches und dem Lambda-Wert erläutert. Der Lambda-Wert ist eine dimensionslose Kennzahl aus der Verbrennungslehre, die das Massenverhältnis von Sauerstoff (Luft) zu Brennstoff relativ zum jeweils stöchiometrisch idealen Verhältnis für einen theoretisch vollständigen Verbrennungsprozess angibt. Aus dieser Kennzahl lassen sich Rückschlüsse auf den Verbrennungs-verlauf, Temperaturen, Schadstoffentstehung und den Wirkungsgrad ziehen.

Die Pyrolyse wird üblicher Weise bei einem Sauerstoffanteil von 0% und damit einem Lambda-Wert von 0 (λ=0=) durchgeführt. Es kann in gewissen Fällen jedoch ein ganz minimaler Anteil an Sauerstoff von ganz wenigen Prozent auch bei der Pyrolyse vorhanden sein.

Bei der Vergasung handelt es sich um ein Mittelding zwischen der Pyrolyse und der Verbrennung. Die Vergasung charakterisiert üblicherweise eine unterstöchiometrische thermo-chemische oxidative Umsetzung unter Bildung eines synthetisch brennbaren Gases mit einem Lambda-Wert von größer als 0 und kleiner als 1 (0<λ< 1).

Die Verbrennung erfordert je nach zu verbrennendem Material einen so hohen Sauerstoffanteil, dass der Lambda-Wert zumindest gleich 1 ist oder größer als 1 ist (λ≥1). Zumeist oder bevorzugt wird bei der Verbrennung jedoch mehr an Sauerstoff (O₂) zugeleitet oder bereitgestellt, als für die oxidative Umsetzung der Organik notwendig oder erforderlich wäre.

In der Fig. 1 ist ein Anlagenschema einer Behandlungsanlage 1 vereinfacht und stark stilisiert gezeigt, welche zumindest einen Pyrolyse-Reaktor 2, zumindest eine Brennvorrichtung 3 und zumindest eine Trocknungsvorrichtung 4 für eine zu behandelnde Biomasse 5 umfasst.

Die Behandlungsanlage 1 ist grundsätzlich dazu vorgesehen, in einem thermo-chemischen Behandlungsverfahren oder thermo-chemischen Behandlungsvorgang die Biomasse 5 zu behandeln. Die Behandlung der Biomasse 5 erfolgt in einem kombinierten Verfahren, nämlich mittels einer physikalischen Behandlung und der thermo-chemischen Behandlung. Als sogenannte Biomasse 5 werden hier insbesondere organische Abfallprodukte verstanden. Zu den organischen Abfallprodukten zählen unter anderem Schlämme oder schlammartige Stoffe aus Kläranlagen, Schlachtbetrieben, landwirtschaftlichen Betrieben, der Tierhaltung, Lebensmittelindustrie, Papierindustrie und der chemischen Industrie. Dabei kann es sich z.B. um Klärschlamm, Schlachtabfälle, Tiermehl, Exkremente und vieles mehr handeln. Unter dem Begriff der Biomasse 5 werden sämtliche Massen verstanden oder darunter impliziert, wo organische Verbindungen in komplexer oder weniger komplexer Form enthalten sind oder darin vorkommen. Um die Behandlung der Biomasse 5 durchführen zu können, müssen z.B. die Schlämme organische, thermisch umsetzbare Verbindungen beinhalten.

Ein möglicher Aspekt der Erfindung kann in der wirtschaftlichen Behandlung der Biomasse und der Rückgewinnung von zumindest einem in der Biomasse 5 enthaltenen Wertstoff liegen. Der Wertstoff kann z.B. Phosphor (P) oder eine Phosphorverbindung wie z.B. P₂O₅, Kalium, Calcium, Magnesium oder dergleichen sein. Ein weiterer möglicher Aspekt der Erfindung kann in der Reduzierung oder Vermeidung von Problemstoffen und der Energieeffizienz der gesamten Behandlungsanlage 1 liegen.

Je nach Art und Zusammensetzung der Biomasse 5 wurde diese bislang unterschiedlichst entsorgt oder weiterverarbeitet. Eine erste Möglichkeit stellt die thermische Verwertung durch Verbrennung in Müllverbrennungsanlagen, einem Zementwerk oder ähnlichen Anlagen dar. Eine weitere Möglichkeit, insbesondere bei Klärschlamm, ist die landwirtschaftliche Ausbringung auf den Feldern. Dabei werden jedoch alle im Klärschlamm mit enthaltenen Schadstoffe, Mikroplastik und dergleichen auf den Feldern verteilt und kommen so auch ins Grundwasser. Schließlich kann auch eine Kompostierung oder Vererdung erfolgen.

Von der Biomasse 5 kann zumindest ein Mengenanteil derselben, insbesondere jedoch die gesamte Menge der zu behandelnden Biomasse 5, vor dem Zuführen in die Trocknungsvorrichtung 4 und in weiterer Folge in den Pyrolyse-Reaktor 2 in einer Entwässerungsvorrichtung 6 auf einen Feuchtigkeitswert entwässert werden, der aus einem Feuchtigkeits-Wertebereich stammt, dessen untere Grenze 70 Gew.%, insbesondere 80 Gew.%, und dessen obere Grenze 95 Gew.%, insbesondere 90 Gew.%, bezogen auf die Gesamtmasse der Biomasse 5 beträgt.

Unabhängig von diesem Entwässerungsschritt oder zusätzlich zu diesem Entwässerungsschritt wird zumindest ein Mengenanteil der zu behandelnden Biomasse 5, insbesondere jedoch die gesamte Menge der zu behandelnden Biomasse 5, vor dem Zuführen in den Pyrolyse-Reaktor 2 in der Trocknungsvorrichtung 4 auf einen Feuchtigkeitswert getrocknet, der aus einem Feuchtigkeits-Wertebereich stammt, dessen untere Grenze 3 Gew.%, insbesondere 5 Gew.%, und dessen obere Grenze 20 Gew.%, insbesondere 10 Gew.%, beträgt. Bevorzugt wird jedoch die gesamte Menge der zu behandelnden Biomasse 5 der Vortrocknung unterzogen. Sind sowohl die Entwässerungsvorrichtung 6 als auch die Trocknungsvorrichtung 4 vorgesehen, können diese gemeinsam eine Trocknungsanlage bilden.

Die zu behandelnde Biomasse 5 wird bevorzugt mit der zuvor beschriebenen Feuchtigkeits-Reduzierung und/oder ohne der zuvor beschriebenen Feuchtigkeits-Reduzierung, dem Pyrolyse-Reaktor 2 zugeführt. Dabei ist es noch möglich, den Massestrom der dem Pyrolyse-Reaktor 2 zugeführten Biomasse 5 zu ermitteln und gegebenenfalls in einer Steuerungsvorrichtung 7 abzuspeichern oder zu hinterlegen.

Die Steuerungsvorrichtung 7 dient auch dazu, den gesamten Ablauf der Biomassebehandlung von deren Anlieferung bis zum Ende des gesamten Behandlungsablaufes zu überwachen und alle Anlagenteile oder Anlagenkomponenten nach vorgegebenen Prozessschritten zu steuern. Die jeweiligen Kommunikationsverbindungen zwischen der Steuerungsvorrichtung 7 und den einzelnen Anlagenteilen oder Anlagenkomponenten sind in strichlierten Linien angedeutet. Das Zuführen der Biomasse 5 in den Pyrolyse-Reaktor 2 kann mittels eines Schleusensystems 8, wie z.B. einer Vertikaldrehschleuse, in bevorzugter gasdichter Weise erfolgen.

Ist die vorgetrocknete Biomasse 5 dem Pyrolyse-Reaktor 2 zugeführt worden, findet in diesem die thermo-chemische Umwandlung bzw. Behandlung der Biomasse 5 statt, welche als Pyrolysierungs-Vorgang bezeichnet werden kann. Hier findet eine thermische Zersetzung der Biomasse 5 in Pyrolysekoks und Pyrolysegas jeweils mit den unterschiedlichsten Bestandteilen statt. Der Pyrolysekoks stellt überwiegend eine Feststofffraktion dar, welche auch als Carbonisat bezeichnet werden kann.

Der Pyrolyse-Reaktor 2 kann z.B. als Schneckenreaktor ausgebildet sein, in welchem die thermische Zersetzung der Biomasse 5 bei einer Temperatur in einem Temperaturbereich zwischen 400 °C, insbesondere 450 °C, und 600 °C, insbesondere 550 °C, erfolgt. Dieser Vorgang erfolgt bei Sauerstoff reduzierten Bedingungen bei einer Verweilzeit zwischen 20 und 30 min. Es kann eine geringe Sauerstoffkonzentration von kleiner 5% im Pyrolyse-Reaktor 2 vorliegen.

Bei dem entstehenden Pyrolysegas handelt es sich zumeist um ein Öl-/Gasgemisch ggf. mit staubförmigen Anteilen. Nach erfolgter Behandlung der Biomasse 5 im Pyrolyse-Reaktor 2 wird der dabei entstandene Pyrolysekoks und das Pyrolysegas bevorzugt räumlich voneinander getrennt aus dem Pyrolyse-Reaktor 2 abgeführt oder abgeleitet, wie dies im vorliegenden Ausführungsbeispiel gezeigt ist. Es kann auch eine gemeinsame Ableitung aus dem Pyrolyse-Reaktor 2 und spätere oder nachfolgende Trennung erfolgen.

Das im Pyrolyse-Reaktor 2 aus der Biomasse 5 entstehende Pyrolysegas wird seinerseits in die Brennvorrichtung 3 geleitet, wobei das Pyrolysegas unter Bildung eines Rauchgases in der Brennvorrichtung 3 verbrannt wird. Das dabei entstehende oder gebildete Rauchgas wird aus der Brennvorrichtung 3 abgeleitet und einer eigenen nachfolgend befindlichen oder angeordneten Zumischvorrichtung 9 zugeleitet. Das Verbrennungsprodukt "Rauchgas" weist zumeist noch einen Restanteil an Sauerstoff (O₂) auf, wobei der Sauerstoffgehalt im Rauchgas in etwa bis zu 5 Vol.% betragen kann.

Die Zumischvorrichtung 9 kann unter anderem eine Mischkammer umfassen, in welche zusätzlich zu dem aus der Brennvorrichtung 3 stammenden Rauchgas zumindest ein Sauerstoff enthaltendes Gas, wie z.B. Umgebungsluft und/oder Sauerstoff (O₂) zugemischt oder zudosiert wird. Wird zumindest das Pyrolysegas mittels der Brennvorrichtung 3 verbrannt, wird Wärmeenergie erzeugt. Das aus der Brennvorrichtung 3 abgeleitete Rauchgas weist zumeist einen sehr hohen Temperaturwert auf, der aus einem Temperatur-Wertebereich stammt, dessen untere Grenze 800 °C, insbesondere 850°C, und dessen obere Grenze 1.200°C, insbesondere 1.000 °C, beträgt.

Auf die Darstellung von Dosiervorrichtungen, Ventilen oder dergleichen wurde der besseren Übersichtlichkeit verzichtet. Es sei weiters angemerkt, dass zur Kontrolle und/oder Überwachung an oder in der Zumischvorrichtung 9 eigene Messanordnungen zur Ermittlung unterschiedlichster Parameter vorgesehen sein können. So können z.B. die Temperaturen aller der Zumischvorrichtung 9 zugeleiteten Gase jeweils für sich getrennt ermittelt werden. Als weitere Parameter können auch z.B. der Sauerstoffgehalt sowie der Anteil oder der Gehalt an nachfolgend beschriebenen Gasen jeweils für sich getrennt ermittelt werden. Die Messanordnungen stehen ihrerseits mit der Steuerungsvorrichtung 7 in Kommunikationsverbindung. Der Einfachheit halber wurde nur eine Verbindungslinie zwischen der Zumischvorrichtung 9 und der Steuerungsvorrichtung 7 dargestellt.

In der Zumischvorrichtung 9 wird dem Rauchgas einerseits Umgebungsluft und/oder Sauerstoff zudosiert und andererseits durch das den Sauerstoff enthaltende zumindest eine Gas die Temperatur reduziert und somit abgekühlt. Das aus der Zumischvorrichtung 9 austretende Gasgemisch wird nachfolgend direkt und bevorzugt ohne zusätzlichen Filtervorgang der Trocknungsvorrichtung 4 zugeleitet und deshalb zur leichteren Unterscheidung der in der Behandlungsanlage 1 vorhandenen Gase als sogenanntes Trocknungsgas bezeichnet.

Das aus der Zumischvorrichtung 9 abgeleitete Trocknungsgas soll einen Temperaturwert aufweisen, der aus einem Temperatur-Wertebereich stammt, dessen untere Grenze 100°C, insbesondere 300°C, und dessen obere Grenze 700 °C, insbesondere 500 °C, beträgt.

Weiters soll das aus der Zumischvorrichtung 9 abgeleitete Trocknungsgas einen Sauerstoffgehalt aufweisen, der aus einem Sauerstoffgehalt-Wertebereich stammt, dessen untere Grenze 6 Vol.%, insbesondere 15 Vol.%, und dessen obere Grenze 20 Vol.%, insbesondere 17 Vol.%, beträgt. Besonderes bevorzugt soll der Sauerstoffgehalt nicht größer als 17 Vol.% sein.

Das aus der Zumischvorrichtung 9 abgeleitete Trocknungsgas enthält unter anderem das Gas Schwefeldioxid (SO₂). Schwefeldioxid ist ein farbloses, schleimhautreizendes, stechend riechendes und sauer schmeckendes, giftiges Gas. Das Trocknungsgas kann weiters auch noch Schwefeltrioxid (SO₃) enthalten, welches bei den zuvor angegeben hohen Temperaturen ebenfalls einen gasförmigen Aggregatzustand aufweist.

Nachfolgend wird eine weitere und wahlweise mögliche Behandlung des Pyrolysekokses mit den möglichen Verfahrensschritten beschrieben, welche durchgeführt werden kann, jedoch nicht zwingend erfolgen oder durchgeführt muss.

Der im Pyrolyse-Reaktor 2 aus der Biomasse 5 gebildete Pyrolysekoks kann nun grundsätzlich zur Durchführung eines weiteren zusätzlichen Behandlungsschritts in eine Koksbehandlungsvorrichtung 10 weitergefördert werden. Dies kann auf direktem Weg erfolgen. Es wäre aber noch möglich, dass der aus dem Pyrolyse-Reaktor 2 abgeführte Pyrolysekoks vor dem Zuführen in die Koksbehandlungsvorrichtung 10 in einen Zwischenbehälter 11 gefördert und dort zwischengespeichert wird. Die Entnahme aus dem Zwischenbehälter 11 oder der Schritt des Weiterförderns des Pyrolysekokses aus dem Zwischenbehälter 11 zur Koksbehandlungsvorrichtung 10 kann z.B. mittels einer Förderschnecke und eine nachfolgend an die Förderschnecke angeordnete Zellenradschleuse erfolgen.

Es sein angemerkt, dass das Schwefeldioxid (SO₂) und/oder das Schwefeltrioxid (SO₃) bereits im Pyrolysegas und/oder in dem aus der Koksbehandlungsvorrichtung 10 abgeleiteten Koksabgas und/oder auch im Rauchgas enthalten sein kann. Das in der Koksbehandlungsvorrichtung 10 entstehende Koksabgas kann auch als Vergasergas bezeichnet werden.

Befindet sich die im vorhergehenden Behandlungsschritt im Pyrolyse-Reaktor 2 zum Pyrolysekoks behandelte Biomasse 5 in der Koksbehandlungsvorrichtung 10, wird der Pyrolysekoks in einem möglichen nachfolgenden Behandlungsschritt weiter thermisch behandelt. Dies kann erfolgen und stellt eine weitere alternative Weiterbehandlung dar. Dabei wird der Pyrolysekoks in ein überwiegend festes Rückstandsprodukt, insbesondere ein rieselfähiges Rückstandsprodukt, und in ein Koksabgas zersetzt. Bei dieser weiteren thermischen Behandlung in der Koksbehandlungsvorrichtung 10 kann eine Vergasung und/oder auch eine Verbrennung erfolgen. Die Koksbehandlungsvorrichtung 10 kann auch als sogenannter oxidativer Koksbehandler bezeichnet werden, welcher eine Vergasung und/oder eine Verbrennung ermöglicht oder zulässt. Im zumeist festen Rückstandsprodukt ist der zumindest eine Wertstoff enthalten, auf welchen die Rückgewinnung gerichtet sein kann. Aus der Koksbehandlungsvorrichtung 10 wird das Rückstandsprodukt räumlich getrennt vom Koksabgas abgeführt, wobei das Rückstandsprodukt in einem nicht näher bezeichneten Behältnis gesammelt werden kann. Das Koksabgas kann so eigens aus der Koksbehandlungsvorrichtung 10 abgeleitet werden.

Der Pyrolysekoks kann in der Koksbehandlungsvorrichtung 10 mit einem Temperaturwert vergast werden, der aus einem Temperatur-Wertebereich stammt, dessen untere Grenze 400°C, insbesondere 500°C, und dessen obere Grenze 1.000 °C, insbesondere 900 °C, beträgt.

Es kann auch das aus der Koksbehandlungsvorrichtung 10 abgeleiteten Koksabgases in die Brennvorrichtung 3 geleitet werden, wobei das Koksabgas in der Brennvorrichtung 3 ebenfalls unter Bildung des Rauchgases verbrannt wird. Das dabei entstehende oder gebildete Rauchgas wird ebenfalls aus der Brennvorrichtung 3 abgeleitet. Werden beide Gase, nämlich das Pyrolysegas und das Koksabgas, der Brennvorrichtung 3 zugeleitet, können diese räumlich getrennt voneinander der Brennvorrichtung 3 zugeleitet und in dieser verbrannt werden. Unabhängig davon könnten aber auch beide Gase gemeinsam der Brennvorrichtung 3 zugeleitet werden, wie dies mit einem in strich-punktierten Linien dargestellten Pfeil angedeutet ist. Werden beide Gase in der Brennvorrichtung 3 verbrannt, bildet sich das zuvor beschriebene Rauchgas auch aus diesen beiden Gasen und enthält unter anderem das Gas Schwefeldioxid (SO₂) und/oder Schwefeltrioxid (SO₃).

Zur Trocknung der Biomasse 5, insbesondere der zuvor beschriebenen Schlämme, können die unterschiedlichst ausgebildeten Trocknungsvorrichtungen 4 eingesetzt werden. Es kann dabei z.B. jene eingesetzt werden, wie diese in der DE 10 2010 049 339 A1 beschrieben worden ist. Das dazu eingesetzte Trocknungsgas wird bei der gegenständlichen Behandlungsanlage 1 direkt von dem in der Brennvorrichtung 3 zum Rauchgas verbrannten Pyrolysegas und gegebenenfalls dem Koksabgas gebildet, wobei dem Rauchgas in der Zumischvorrichtung 9 der zuvor beschriebene zumeist vorbestimmte Volumenanteil an Sauerstoff zudosiert worden ist und damit das Trocknungsgas bildet.

Bei der Trocknung der aus organischen Abfallprodukten gebildeten Biomasse 5 in der Trocknungsvorrichtung 4 wird das Gas Ammoniak (NH₃) gebildet oder freigesetzt. Ammoniak ist bei diesen Temperaturen ein stark stechend riechendes, farbloses, wasserlösliches und giftiges Gas, das zu Tränen reizt und erstickend wirkt.

Bei den erfindungsgemäßen Verfahrensschritten kommt es durch den Einsatz und der Verwendung des Trocknungsgases, in welchem unter anderem das Gas Schwefeldioxid (SO₂) enthalten ist, und dem Ammoniak (NH₃) zu einer chemischen Reaktion zumindest dieser beiden Gase. Bei dieser chemischen Reaktion bildet sich aus dem Ammoniak (NH₃) und dem Schwefeldioxid (SO₂) ein fester, kristalliner Stoff, nämlich Ammoniumsulfit ((NH₄)₂SO₃). Es kann auch noch Schwefeltrioxid (SO₃) im Trocknungsgas mit enthalten sein.

So kann je nach dem vorhandenen Reaktionsgas mit dem Ammoniak (NH₃) Ammoniumsulfit ((NH₄)₂SO₃) und/oder Ammoniumsulfat ((NH₄)₂SO₄) gebildet werden. Dies in Abhängigkeit von der Temperatur des der Trocknungsvorrichtung 4 zugeleiteten Trocknungsgases. Das in der Trocknungsvorrichtung 4 gebildete Ammoniumsulfit ((NH₄)₂SO₃) und/oder das Ammoniumsulfat ((NH₄)₂SO₄) werden oder wird gemeinsam mit der getrockneten Biomasse 5 dem Pyrolyse-Reaktor 2 zugeführt und anschließend pyrolysiert.

Das aus der Trocknungsvorrichtung 4 austretende oder abgeleitete Gas wird als Trocknerabgas oder Trocknerabluft bezeichnet. Aufgrund der zuvor beschriebenen Bindung und Umwandlung von Ammoniak (NH₃) ist nur mehr eine bedingte chemische und/oder physikalische Reinigung des Trocknerabgases oder der Trocknerabluft durchzuführen oder notwendig. Es wird bevorzugt vor dem Ableiten des Trocknerabgases oder der Trocknerabluft an die Umgebung diese durch eine vereinfacht dargestellte Filtervorrichtung 13 hindurchgeleitet. Damit können Staubpartikel herausgefiltert werden, welche gegebenenfalls der getrockneten Biomasse 5 vor dem Zuführen in den Pyrolyse-Reaktor 2 bei der Filterreinigung beigefügt werden können.

Der Zumischvorrichtung 9 kann weiters auch noch ein aus einem Blockheizkraftwerk (BHKW) 12 stammendes weiteres Rauchgas zugeleitet werden. Um eine Temperaturreduzierung des der Zumischvorrichtung 9 zugeleiteten Rauchgases zu erzielen, soll das weitere Rauchgas mit einem Temperaturwert der Zumischvorrichtung 9 zugeleitet werden, der aus einem Temperatur-Wertebereich stammt, dessen untere Grenze 100°C, insbesondere 200°C, und dessen obere Grenze 500 °C, insbesondere 300 °C, beträgt.

Zur Erhöhung der Energieeffizienz kann noch vorgesehen werden, dass von dem aus der Brennvorrichtung 3 abgeleiteten Rauchgas eine Teilmenge desselben vor dem Zuleiten in die Zumischvorrichtung 9 abgezweigt wird. Die abgezweigte Teilmenge kann als Rezirkulationsgas bezeichnet werden und wird anschließend durch einen Wärmetauscher 14 zur Wärmeabgabe oder Wärmereduzierung hindurchgeleitet. Die Rauchgastemperatur des Rezirkulationsgases wird so reduziert. Das abgezweigte Rauchgas wird nachfolgend der Brennvorrichtung 3 zur Verbrennung zugeleitet. Die Zuleitung in die Brennvorrichtung 3 kann entweder gemeinsam mit dem Pyrolysegas und/oder dem Koksabgas erfolgen oder aber eine voneinander getrennte Zuleitung vorgesehen sein, so wie dies dargestellt worden ist. Weiters ist noch dargestellt, dass der Brennvorrichtung 3 zur Verbrennung des Pyrolysegases und/oder des Koksabgases sowie gegebenenfalls auch des zurückgeleitenten Rauchgases Sauerstoff, insbesondere Sauerstoff enthaltende Umgebungsluft, zugeleitet wird. Es ist bevorzugt für jedes der zuvor beschriebenen Gase eine eigene Zuleitung vorgesehen. Die zugeleitete Umgebungsluft kann auch als Verbrennungsluft bezeichnet werden, welche mittels einer angedeuteten Fördervorrichtung 15 der Brennvorrichtung 3 zugeleitet werden kann.

Wird als Zudosiergas z.B. Umgebungsluft als das den Sauerstoff (O₂) enthaltende Gas gewählt, kann dieses vor dem Zuleiten in die Zumischvorrichtung 9 durch den Wärmetauscher 14 hindurchgeleitet und mittels der abgezweigten Teilmenge des Rauchgases dessen Temperatur erhöht werden. Die Umgebungsluft weist je nach Jahreszeit eine ortsübliche Umgebungstemperatur auf, von welcher aus die Temperaturerhöhung erfolgt. Nach dem Durchströmen oder dem Durchtritt der das Zudosiergas bildenden Umgebungsluft erfolgt das Zuleiten in die Zumischvorrichtung 9 und das Zudosieren und Zumischen zu dem in der Zumischvorrichtung 9 befindlichen Rauchgas. Es kann auch hier eine eigene, mit dem gleichen Bezugszeichen versehene Fördervorrichtung 15 vorgesehen sein, wie dies angedeutet ist. Es wäre aber auch möglich, mit nur einer Fördervorrichtung 15 die Umgebungsluft mit entsprechend ausgelegten Leitungsverbindungen und Ventilanordnungen sowohl zum Wärmetauscher 14 als auch zur Brennvorrichtung 3 hin zu fördern.

Am Beginn des Behandlungsvorgangs der Biomasse 5 ist zuerst diese in der Trocknungsvorrichtung 4 auf einen vorbestimmten Feuchtigkeitsgehalt zu trocknen und somit Feuchtigkeit, insbesondere Wasser, zu entziehen. Da der Pyrolyse-Reaktor 2 zu diesem Zeitpunkt noch nicht in Betrieb ist, ist anstatt des Trocknungsgases ein aus einem anderen Brennstoff, wie z.B. Erdgas, Biogas, Flüssiggas, Heizöl etc. und/oder heiße Rauchgase aus anderen Verbrennungsprozessen wie z.B. Abgase einer Verbrennungskraftmaschine oder einer alternativen Feuerung, gebildetes Rauchgas zu bilden und dieses der Zumischvorrichtung 9 zuzuführen und in dieser das Trocknungsgas für die Trocknung der Biomasse 5 in der Trocknungsvorrichtung 4 bereitzustellen. Bei der oder den Verbrennungskraftmaschinen kann es sich z.B. um eine Gasturbine und/oder einen Gasmotor handeln. Die alternative Feuerung kann z.B. von einem Biomassekessel oder dergleichen gebildet sein. Sobald dem Pyrolyse-Reaktor 2 getrocknete Biomasse 5 zugeführt werden kann und sich dieser in Betrieb befindet und das Pyrolysegas der Brennvorrichtung 3 zugleitet wird, kann die Erstversorgung der Trocknungsvorrichtung 4 eingestellt werden.

Mit der zuvor beschriebenen Behandlungsanlage 1 kann die bereitgestellte Biomasse 5 der thermo-chemischen Behandlung unterzogen werden. Es sind dabei zumindest folgende Verfahrensschritte durchzuführen:
Bereitstellen der zu behandelnden Biomasse 5,
- Bereitstellen einer Trocknungsvorrichtung 4,
- Bereitstellen zumindest eines Pyrolyse-Reaktors 2,
- Bereitstellen zumindest einer Brennvorrichtung 3,
- Bereitstellen zumindest einer Zumischvorrichtung 9,
- Zuführen der bereitgestellten und zu behandelnden Biomasse 5 in die Trocknungsvorrichtung 4, wobei die in der Biomasse 5 enthaltene Feuchtigkeit reduziert und weiters beim Trocknungsvorgang aus der Biomasse 5 Ammoniak (NH₃) freigesetzt wird,
- Abgeben der zu behandelnden Biomasse 5 aus der Trocknungsvorrichtung 4,
- Zuführen der zu behandelnden Biomasse 5 in den Pyrolyse-Reaktor 2,
- Pyrolysieren der Biomasse 5 im Pyrolyse-Reaktor 2 und dabei thermische Zersetzung der Biomasse 5 in Pyrolysekoks und Pyrolysegas,
- Abführen des Pyrolysekokses und Ableiten des Pyrolysegases aus dem Pyrolyse-Reaktor 2,
- Zuleiten des aus dem Pyrolyse-Reaktor 2 abgeleiteten Pyrolysegases in die Brennvorrichtung 3 und Verbrennen des Pyrolysegases unter Bildung eines Rauchgases,
- Ableiten des Rauchgases aus der Brennvorrichtung 3 und Zuleiten des Rauchgases in die Zumischvorrichtung 9,
- Zudosieren von Sauerstoff (O₂) und/oder zumindest eines Sauerstoff (O₂) enthaltenden Gases zum Rauchgas in der Zumischvorrichtung 9 und Bildung eines Trocknungsgases, welches Trocknungsgas unter anderem Schwefeldioxid (SO₂) und/oder Schwefeltrioxid (SO₃) jeweils in einem gasförmigen Aggregatzustand enthält,
- Ableiten des Trocknungsgases aus der Zumischvorrichtung 9 und Zuleiten des Trocknungsgases in die Trocknungsvorrichtung 4,
- Hindurchleiten des Trocknungsgases durch die Trocknungsvorrichtung 4, wobei das im Trocknungsgas unter anderem enthaltene Schwefeldioxid (SO₂) und/oder das Schwefeltrioxid (SO₃) mit dem Ammoniak (NH₃) chemisch zu Ammoniumsulfit ((NH₄)₂SO₃) und/oder Ammoniumsulfat ((NH₄)₂SO₄) reagiert.

In der Fig. 2 ist ein weiteres mögliches Anlagenschema einer gegebenenfalls für sich eigenständigen Ausführungsform der Behandlungsanlage 1 gezeigt, welche ebenfalls dazu ausgebildet oder vorgesehen ist, die physikalische und thermo-chemische Behandlung der Biomasse 5, insbesondere von organischen Abfallprodukten, wie Schlämme aus Kläranlagen, Schlachtbetrieben, landwirtschaftlichen Betrieben, der Tierhaltung, Lebensmittelindustrie, Papierindustrie, durchführen zu können. Deshalb werden auch hier wiederum für gleiche Teile gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen.

Im Gegensatz zu der zuvor beschriebenen Behandlungsanlage 1 wird die Biomasse 5 unter gewolltem Vorhandensein von Sauerstoff verbrannt und dabei bereits das Rauchgas bereitgestellt bzw. erhalten. Das Rauchgas wird bevorzugt und nachfolgend unter bedarfsweiser Zwischenschaltung der Zumischvorrichtung 9 der Trocknungsvorrichtung 4 für den Trocknungsvorgang der Biomasse 5 zugeleitet.

Die Behandlungsanlage 1 umfasst anlagenmäßig bevorzugt einen Speicher zur Aufnahme der zu behandelnden Biomasse 5, gegebenenfalls die Entwässerungsvorrichtung 6, und die Trocknungsvorrichtung 4.

Anschließend an die Trocknungsvorrichtung 4 kann wahlweise aber nicht zwingend, eine eigene Fördervorrichtung 16 vorgesehen sein, mittels welcher die vorgetrocknete oder getrocknete Biomasse 5 einer nachfolgend befindlichen Verbrennungs-Anlageneinheit 17 umfassend zumindest einen ersten Verbrennungs-Reaktor 18 zugefördert werden kann.

Je nach Masse oder anfallender Menge an zu behandelnder Biomasse 5 kann die Verbrennungs-Anlageneinheit 17 auch mehrere Verbrennungs-Reaktoren umfassen, wobei der besseren Übersichtlichkeit halber nur ein weiterer oder zweiter Verbrennungs-Reaktor 19 dargestellt wurde. Der erste Verbrennungs-Reaktor 18 kann z.B. durch einen Drehrohrofen gebildet sein. Der zweite Verbrennungs-Reaktor 19 kann z.B. durch einen Ofen mit Rostfeuerung, wie einem Treppenofen oder dergleichen, gebildet sein.

Es wäre aber auch möglich, wenn die Verbrennungs-Anlageneinheit 17 mehrere Verbrennungs-Reaktoren 18, 19 umfasst, jeweils zueinander gleichartig ausgebildete oder auf dem gleichen Wirkprinzip basierende Verbrennungs-Reaktoren 18 oder 19 einzusetzen.

Weiters könnte aber auch zumindest einer der Verbrennungs-Reaktoren 18, 19 oder aber auch alle der Verbrennungs-Reaktoren 18, 19 durch einen Wirbelschichtofen gebildet sein, der auf Basis der Wirbelschichtfeuerung betrieben wird. Es könnte aber auch zumindest einer der Verbrennungs-Reaktoren 18, 19 zur Durchführung einer Staubfeuerung oder einer Zykloidfeuerung ausgebildet sein.

Diese zuvor erwähnten Feuerungssysteme stellen jene aktuell am gängigsten eingesetzten Ofentypen dar, mittels welcher eine Drehrohrfeuerung, eine Rostfeuerung eine Wirbelschichtfeuerung oder aber auch eine Staubfeuerung oder eine Zykloidfeuerung durchgeführt werden kann. Eine beliebige Kombination oder Mehrfachanordnung der unterschiedlichen Ofentypen kann bei Bedarf vorgesehen werden. Damit kann bei der durchzuführenden Behandlung auf unterschiedliche zu behandelnde Biomassen 5 Bedacht genommen werden.

In dem Verbrennungs-Reaktor 18, 19 oder in den Verbrennungs-Reaktoren 18, 19 wird die zu behandelnde Biomasse 5 unter Zufuhr von Sauerstoff (O₂) und/oder zumindest eines Sauerstoff (O₂) enthaltenden Gases verbrannt, wobei dieser Verbrennungsvorgang auch als Oxidationsvorgang bezeichnet werden kann. Dabei handelt es sich ebenfalls um eine physikalische und thermo-chemische Behandlung der Biomasse 5, jedoch mittels eines Verbrennungsprozesses.

Bei dem zuvor in der Fig. 1 gezeigten und beschriebenen Pyrolyse-Vorgang mittels des Pyrolyse-Reaktors 2 erfolgt eine unterstöchiometrische thermo-chemische Umwandlung bzw. Behandlung der Biomasse 5 zu Pyrolysekoks und Pyrolysegas.

Durch den hier vorgesehenen Verbrennungsvorgang der Biomasse 5 wird diese im Oxidationsprozess mit dem Sauerstoff (O₂) zu einem Verbrennungsprodukt und dem Rauchgas überführt. Bei dem Verbrennungsprodukt kann es sich z.B. um Asche und/oder auch noch um ein noch Feuchtigkeit enthaltendes Produkt handeln. Das Verbrennungsprodukt wird aus dem oder aus den Verbrennungs-Reaktoren 18, 19 abgeführt oder von diesen abgegeben und das Rauchgas jeweils gesammelt abgeleitet. Bevorzugt kann das Rauchgas getrennt und unabhängig vom Verbrennungsprodukt abgeleitet werden, wie dies jeweils mit einer eigenen Leitung angedeutet ist.

Das Rauchgas oder die Rauchgase werden der Zumischvorrichtung 9 mittels einer Leitung zugeleitet, so wie dies zuvor für das aus der Brennvorrichtung 3 abgeleitete Rauchgas bereits beschrieben worden ist.

In der Zumischvorrichtung 9 wird dem aus der Verbrennungs-Anlageneinheit 17 zugeleiteten Rauchgas einerseits Umgebungsluft und/oder Sauerstoff zudosiert und andererseits durch das den Sauerstoff enthaltende zumindest eine Gas die Temperatur reduziert und somit abgekühlt. Das aus der Zumischvorrichtung 9 austretende Gasgemisch wird nachfolgend direkt und bevorzugt ohne zusätzlichen Filtervorgang der Trocknungsvorrichtung 4 zugeleitet und deshalb zur leichteren Unterscheidung der in der Behandlungsanlage 1 vorhandenen Gase als sogenanntes Trocknungsgas bezeichnet. Dazu kann eine nicht näher bezeichnete Trocknungsgas-Zuleitung vorgesehen sein.

Das aus der Zumischvorrichtung 9 abgeleitete Trocknungsgas soll einen Temperaturwert aufweisen, der aus einem Temperatur-Wertebereich stammt, dessen untere Grenze 100°C, insbesondere 300°C, und dessen obere Grenze 700 °C, insbesondere 500 °C, beträgt.

Weiters soll das aus der Zumischvorrichtung 9 abgeleitete Trocknungsgas einen Sauerstoffgehalt aufweisen, der aus einem Sauerstoffgehalt-Wertebereich stammt, dessen untere Grenze 6 Vol.%, insbesondere 15 Vol.%, und dessen obere Grenze 20 Vol.%, insbesondere 17 Vol.%, beträgt. Besonderes bevorzugt soll der Sauerstoffgehalt nicht größer als 17 Vol.% sein.

Das aus der Zumischvorrichtung 9 abgeleitete Trocknungsgas enthält unter anderem das Gas Schwefeldioxid (SO₂). Schwefeldioxid ist ein farbloses, schleimhautreizendes, stechend riechendes und sauer schmeckendes, giftiges Gas. Das Trocknungsgas kann weiters auch noch Schwefeltrioxid (SO₃) enthalten, welches bei den zuvor angegeben hohen Temperaturen ebenfalls einen gasförmigen Aggregatzustand aufweist.

Zur Erhöhung der Energieeffizienz kann noch vorgesehen werden, dass von dem aus der Verbrennungs-Anlageneinheit 17 abgeleiteten Rauchgas eine Teilmenge desselben vor dem Zuleiten in die Zumischvorrichtung 9 abgezweigt wird. Die abgezweigte Teilmenge kann als Rezirkulationsgas bezeichnet werden und wird anschließend durch den Wärmetauscher 14 zur Wärmeabgabe oder Wärmereduzierung hindurchgeleitet. Die Rauchgastemperatur des Rezirkulationsgases wird so reduziert. Das abgezweigte Rauchgas wird nachfolgend wiederum der Verbrennungs-Anlageneinheit 17, insbesondere zumindest einem der Verbrennungs-Reaktoren 18, 19, zur weiteren Verbrennung zugeleitet.

Weiters ist noch dargestellt, dass der Verbrennungs-Anlageneinheit 17, insbesondere zumindest einem der Verbrennungs-Reaktoren 18, 19, zur Nachverbrennung des zurückgeleitenten Rauchgases auch noch Sauerstoff, insbesondere Sauerstoff enthaltende Umgebungsluft, direkt zugeleitet und/oder dem Rezirkulationsgas zugemischt werden kann. Dabei wäre es auch noch möglich, den Sauerstoff (O₂) und/oder zumindest das den Sauerstoff (O₂) enthaltenden Gas durch einen nicht mehr näher dargestellten weiteren Wärmetauscher hindurchzuleiten, um eine Temperturerhöhung duchführen zu können.

Es kann bevorzugt für jedes der zuvor beschriebenen Gase eine eigene Zuleitung vorgesehen. Die zugeleitete Umgebungsluft kann auch als Verbrennungsluft bezeichnet werden, welche mittels zumindest einer angedeuteten Fördervorrichtung 15 der Verbrennungs-Anlageneinheit 17, insbesondere zumindest einem der Verbrennungs-Reaktoren 18, 19, zugeleitet werden kann. Hier ist für jeden der Verbrennungs-Reaktoren 18, 19 eine eigene Fördervorrichtung 15 vorgesehen.

Wird als Zudosiergas z.B. Umgebungsluft als das den Sauerstoff (O₂) enthaltende Gas gewählt, kann dieses vor dem Zuleiten in die Zumischvorrichtung 9 durch den Wärmetauscher 14 hindurchgeleitet und mittels der abgezweigten Teilmenge des Rauchgases dessen Temperatur erhöht werden. Die Umgebungsluft weist je nach Jahreszeit eine ortsübliche Umgebungstemperatur auf, von welcher aus die Temperaturerhöhung erfolgt. Nach dem Durchströmen oder dem Durchtritt der das Zudosiergas bildenden Umgebungsluft erfolgt das Zuleiten in die Zumischvorrichtung 9 und das Zudosieren und Zumischen zu dem in der Zumischvorrichtung 9 befindlichen Rauchgas. Es kann auch hier eine eigene, mit dem gleichen Bezugszeichen versehene Fördervorrichtung 15 vorgesehen sein, wie dies angedeutet ist. Es wäre aber auch möglich, mit nur einer Fördervorrichtung 15 die Umgebungsluft mit entsprechend ausgelegten Leitungsverbindungen und Ventilanordnungen sowohl zum Wärmetauscher 14 als auch zur Verbrennungs-Anlageneinheit 17 hin zu fördern.

Weiters ist es möglich, dass auch hier der Zumischvorrichtung 9 noch ein aus einem Blockheizkraftwerk (BHKW) 12 stammendes weiteres Rauchgas zugeleitet wird. Die Steuerungsvorrichtung 7 kann ebenfalls wiederum vorgesehen sein, um die gesamte Behandlungsanlage 1 und den Verfahrensablauf mit deren Anagenkomponenten zu steuern oder zu regeln.

Mittels der in der Fig. 2 beschriebenen Behandlungsanlage 1 kann die bereitgestellte Biomasse 5 behandelt und unter anderem dem beschriebenen Verbrennungsvorgang unterzogen werden. Es sind dabei zumindest folgende Verfahrensschritte durchzuführen:
- Bereitstellen der zu behandelnden Biomasse 5,
- Bereitstellen der Trocknungsvorrichtung 4,
- Bereitstellen der Verbrennungs-Anlageneinheit 17 mit zumindest einem Verbrennungs-Reaktor 18, 19,
- Bereitstellen zumindest der Zumischvorrichtung 9,
- Zuführen der bereitgestellten und zu behandelnden Biomasse 5 in die Trocknungsvorrichtung 4, wobei die in der Biomasse 5 enthaltene Feuchtigkeit reduziert und weiters beim Trocknungsvorgang aus der Biomasse 5 Ammoniak (NH₃) freigesetzt wird,
- Abgeben der zu behandelnden Biomasse 5 aus der Trocknungsvorrichtung 4,
- Zuführen der zu behandelnden Biomasse 5 in den zumindest einen Verbrennungs-Reaktor 18, 19,
- Verbrennen der Biomasse 5 im zumindest einen Verbrennungs-Reaktor 18, 19 und dabei oxidative Umsetzung der Biomasse 5 in ein Verbrennungsprodukt und Rauchgas,
- Abführen des Verbrennungsprodukts und Ableiten des Rauchgases aus dem zumindest einen Verbrennungs-Reaktor 18, 19,
- Zuleiten des Rauchgases in die Zumischvorrichtung 9,
- Zudosieren von Sauerstoff (O₂) und/oder zumindest eines Sauerstoff (O₂) enthaltenden Gases zum Rauchgas in der Zumischvorrichtung 9 und Bildung eines Trocknungsgases, welches Trocknungsgas unter anderem Schwefeldioxid (SO₂) und/oder Schwefeltrioxid (SO₃) jeweils in einem gasförmigen Aggregatzustand enthält,
- Ableiten des Trocknungsgases aus der Zumischvorrichtung 9 und Zuleiten des Trocknungsgases in die Trocknungsvorrichtung 4,
- Hindurchleiten des Trocknungsgases durch die Trocknungsvorrichtung 4, wobei das im Trocknungsgas unter anderem enthaltene Schwefeldioxid (SO₂) und/oder das Schwefeltrioxid (SO₃) mit dem Ammoniak (NH₃) chemisch zu Ammoniumsulfit ((NH₄)₂SO₃) und/oder Ammoniumsulfat ((NH₄)₂SO₄) reagiert.

Es erfolgt auch bei dieser Behandlungsanlage 1 das Zuführen und Trocknen der Biomasse 5 in der Trocknungsvorrichtung 4, anschließend daran wird die getrocknete Biomasse 5 weitergefördert und zumindest einem der Verbrennungs-Reaktoren 18, 19 zugeführt. Durch den in der Verbrennungs-Anlageneinheit 17 durchgeführten Verbrennungsvorgang erfolgt die Oxidation und damit die oxidative Umsetzung der Biomasse 5 in das Verbrennungsprodukt und bereits in das Rauchgas. Wenn der Verbrennungsvorgang mit einem Lambda-Wert von größer als 1 (λ>1) durchgeführt wird, enthält das dabei gebildete oder entstehende Rauchgas auch noch einen gewissen Anteil an Sauerstoff (O₂).

Bei der Behandlungsanlage 1 gemäß der Fig. 1 erfolgt hingegen nach dem Trocknungsvorgang das Zuführen in den Pyrolyse-Reaktor 2 und in diesem die thermische Behandlung. Dabei wird als eines der Zersetzungsprodukte das Pyrolysegas gebildet, welches nachfolgend an dessen Ableitung der Brennvorrichtung 3 zugeleitet und in dieser, gegebenenfalls gemeinsam mit dem Koksabgas, zu dem Rauchgas verbrannt wird.

Das Rauchgas, welches entweder gemäß dem Verfahrensablauf nach Fig.1 oder nach dem Verfahrensablauf nach Fig. 2 gebildet wird, wird nachfolgend der Zumischvorrichtung 9 zugeleitet. Die weiteren Verfahrensschritte werden jeweils gleich durchgeführt und das in der Zumischvorrichtung 9 gebildete Trocknungsgas der Trocknungsvorrichtung 4 zugeleitet.

Die beiden zuvor beschriebenen Verfahrensabläufe unterscheiden sich lediglich in der Wahl der Anlagenkomponenten zur Bildung des Rauchgases aus der zu behandelnden Biomasse 5.

Es könnte aber auch noch vorgesehen werden, dass die Behandlungsanlage 1 eine Kombination aus den zuvor beschriebenen Anlagenkomponenten zur thermo-chemischen Umwandlung bzw. Behandlung der Biomasse 5 umfasst. So könnte sowohl der Pyrolyse-Reaktor 2, gegebenenfalls die Koksbehandlungsvorrichtung 10, und die Brennvorrichtung 3 zum einen als auch die Verbrennungs-Anlageneinheit 17 umfassend zumindest einen Verbrennungs-Reaktor 18, 19 zum anderen parallel nebeneinander eingesetzt werden. Bei beiden Anlagenkomponenten wird aus der Biomasse 5 unter anderem das Rauchgas gebildet, welches dann in weiterer Folge der Zumischvorrichtung 9 zugeleitet wird. Damit können die unterschiedlichen thermo-chemischen Behandlungsvorgänge je nach Bedarf miteinander kombiniert werden.

Mit dieser chemischen Reaktion oder diesen chemischen Reaktionen wird der Ammoniak (NH₃) in Abhängigkeit von den im Trocknungsgas enthaltenen Schwefel-Oxiden in einen festen, zumeist rieselfähigen Aggregatzustand überführt. Dies wäre ansonsten nur mit einem möglichen anderen, zusätzlich zuzugebenden Zusatzstoff erzielbar.

Abschließend sei noch erwähnt, dass die einzelnen Verfahrensschritte und deren zeitliche Abfolge nicht zwingend in der angeführten Reihenfolge erfolgen muss, sondern auch eine davon abweichende zeitliche Abfolge möglich ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Behandlungsanlage
- 2: Pyrolyse-Reaktor
- 3: Brennvorrichtung
- 4: Trocknungsvorrichtung
- 5: Biomasse
- 6: Entwässerungsvorrichtung
- 7: Steuerungsvorrichtung
- 8: Schleusensystem
- 9: Zumischvorrichtung
- 10: Koksbehandlungsvorrichtung
- 11: Zwischenbehälter
- 12: Blockheizkraftwerk
- 13: Filtervorrichtung
- 14: Wärmetauscher
- 15: Fördervorrichtung
- 16: Fördervorrichtung
- 17: Verbrennungs-Anlageneinheit
- 18: erster Verbrennungs-Reaktor
- 19: zweiter Verbrennungs-Reaktor

## Patentansprüche

1. Verfahren zur physikalischen und thermo-chemischen Behandlung von Biomasse (5), insbesondere von organischen Abfallprodukten, wie Schlämme aus Kläranlagen, Schlachtbetrieben, landwirtschaftlichen Betrieben, der Tierhaltung, Lebensmittelindustrie, Papierindustrie, bei dem folgende Schritte in einer Behandlungsanlage (1) durchgeführt werden:
- Bereitstellen der zu behandelnden Biomasse (5),
- Bereitstellen einer Trocknungsvorrichtung (4),
- Bereitstellen zumindest eines Pyrolyse-Reaktors (2),
- Bereitstellen zumindest einer Brennvorrichtung (3),
- Bereitstellen zumindest einer Zumischvorrichtung (9),
- Zuführen der bereitgestellten und zu behandelnden Biomasse (5) in die Trocknungsvorrichtung (4), wobei die in der Biomasse (5) enthaltene Feuchtigkeit reduziert und weiters beim Trocknungsvorgang aus der Biomasse (5) Ammoniak (NH₃) freigesetzt wird,
- Abgeben der zu behandelnden Biomasse (5) aus der Trocknungsvorrichtung (4),
- Zuführen der zu behandelnden Biomasse (5) in den Pyrolyse-Reaktor (2),
- Pyrolysieren der Biomasse (5) im Pyrolyse-Reaktor (2) und dabei thermische Zersetzung der Biomasse (5) in Pyrolysekoks und Pyrolysegas,
- Abführen des Pyrolysekokses und Ableiten des Pyrolysegases aus dem Pyrolyse-Reaktor (2),
- Zuleiten des aus dem Pyrolyse-Reaktor (2) abgeleiteten Pyrolysegases in die Brennvorrichtung (3) und Verbrennen des Pyrolysegases unter Bildung eines Rauchgases,
- Ableiten des Rauchgases aus der Brennvorrichtung (3) und Zuleiten des Rauchgases in die Zumischvorrichtung (9),
- Zudosieren von Sauerstoff (O₂) und/oder zumindest eines Sauerstoff (O₂) enthaltenden Gases zum Rauchgas in der Zumischvorrichtung (9) und Bildung eines Trocknungsgases, welches Trocknungsgas unter anderem Schwefeldioxid (SO₂) und/oder Schwefeltrioxid (SO₃) jeweils in einem gasförmigen Aggregatzustand enthält,
- Ableiten des Trocknungsgases aus der Zumischvorrichtung (9) und Zuleiten des Trocknungsgases in die Trocknungsvorrichtung (4),
- Hindurchleiten des Trocknungsgases durch die Trocknungsvorrichtung (4), wobei das im Trocknungsgas unter anderem enthaltene Schwefeldioxid (SO₂) und/oder das Schwefeltrioxid (SO₃) mit dem Ammoniak (NH₃) chemisch zu Ammoniumsulfit ((NH₄)₂SO₃) und/oder Ammoniumsulfat ((NH₄)₂SO₄) reagiert.

2. Verfahren nach Anspruch 1, **dadurch gekennzeichnet, dass** das Trocknungsgas in der Zumischvorrichtung (9) auf einen Temperaturwert verbracht wird, der aus einem Temperatur-Wertebereich stammt, dessen untere Grenze 100°C, insbesondere 300°C, und dessen obere Grenze 700 °C, insbesondere 500 °C, beträgt.

3. Verfahren nach Anspruch 1 oder 2, **dadurch gekennzeichnet, dass** das Trocknungsgas in der Zumischvorrichtung (9) durch das Zudosieren des Sauerstoffs (O₂) und/oder zumindest des den Sauerstoff (O₂) enthaltenden Gases auf einen Sauerstoffgehalt verbracht wird, der aus einem Sauerstoffgehalt-Wertebereich stammt, dessen untere Grenze 6 Vol.%, insbesondere 15 Vol.%, und dessen obere Grenze 20 Vol.%, insbesondere 17 Vol.%, beträgt.

4. Verfahren nach einem der vorhergehenden Ansprüche, **dadurch gekennzeichnet, dass** der Zumischvorrichtung (9) ein aus einem Blockheizkraftwerk (12) stammendes weiteres Rauchgas zugeleitet wird.

5. Verfahren nach Anspruch 4, **dadurch gekennzeichnet, dass** das weitere Rauchgas mit einem Temperaturwert der Zumischvorrichtung (9) zugeleitet wird, der aus einem Temperatur-Wertebereich stammt, dessen untere Grenze 100°C, insbesondere 200°C, und dessen obere Grenze 500 °C, insbesondere 300 °C, beträgt.

6. Verfahren nach einem der vorhergehenden Ansprüche, **dadurch gekennzeichnet, dass** von dem aus der Brennvorrichtung (3) abgeleiteten Rauchgas eine Teilmenge vor dem Zuleiten in die Zumischvorrichtung (9) abgezweigt wird, diese Teilmenge des Rauchgases durch einen Wärmetauscher (14) hindurchgeleitet und die Rauchgastemperatur reduziert wird und nachfolgend das abgezweigte Rauchgas der Brennvorrichtung (3) zur Verbrennung zugeleitet wird.

7. Verfahren nach Anspruch 6, **dadurch gekennzeichnet, dass** Umgebungsluft als das den Sauerstoff (O₂) enthaltende Gas durch den Wärmetauscher (14) hindurchgeleitet und die Temperatur mittels des hindurchgeleiteten Rauchgases erhöht wird und nachfolgend die Umgebungsluft der Zumischvorrichtung (9) zugeleitet und dem Rauchgas zudosiert wird.

8. Verfahren nach einem der vorhergehenden Ansprüche, **dadurch gekennzeichnet, dass** der aus dem Pyrolyse-Reaktor (2) abgeführte Pyrolysekoks einer bereitgestellten Koksbehandlungsvorrichtung (10) zugeführt und in der Koksbehandlungsvorrichtung (10) in ein festes, insbesondere rieselfähiges, Rückstandsprodukt und in ein Koksabgas weiter zersetzt wird.

9. Verfahren nach Anspruch 8, **dadurch gekennzeichnet, dass** das Rückstandsprodukt räumlich getrennt vom Koksabgas aus der Koksbehandlungsvorrichtung (10) abgeführt wird.

10. Verfahren nach Anspruch 8 oder 9, **dadurch gekennzeichnet, dass** das aus der Koksbehandlungsvorrichtung (10) abgeleitete Koksabgas der Brennvorrichtung (3) zugeleitet und das Koksabgas in der Brennvorrichtung (3) unter Bildung des Rauchgases verbrannt und aus dieser ebenfalls abgeleitet wird.

11. Verfahren nach einem der Ansprüche 8 bis 10, **dadurch gekennzeichnet, dass** das Pyrolysegas und das Koksabgas voneinander getrennt der Brennvorrichtung (3) zugeleitet werden.

12. Verfahren nach einem der Ansprüche 8 bis 10, **dadurch gekennzeichnet, dass** das Pyrolysegas und das Koksabgas gemeinsam der Brennvorrichtung (3) zugeleitet werden.

13. Verfahren nach einem der vorhergehenden Ansprüche, **dadurch gekennzeichnet, dass** das in der Trocknungsvorrichtung (4) gebildete Ammoniumsulfit ((NH₄)₂SO₃) und/oder das Ammoniumsulfat ((NH₄)₂SO₄) gemeinsam mit der getrockneten Biomasse (5) dem Pyrolyse-Reaktor (2) zugeführt werden oder wird.

14. Verfahren zur physikalischen und thermo-chemischen Behandlung von Biomasse (5), insbesondere von organischen Abfallprodukten, wie Schlämme aus Kläranlagen, Schlachtbetrieben, landwirtschaftlichen Betrieben, der Tierhaltung, Lebensmittelindustrie, Papierindustrie, bei dem folgende Schritte in einer Behandlungsanlage (1) durchgeführt werden:
- Bereitstellen der zu behandelnden Biomasse (5),
- Bereitstellen einer Trocknungsvorrichtung (4),
- Bereitstellen einer Verbrennungs-Anlageneinheit (17) mit zumindest einem Verbrennungs-Reaktor (18, 19),
- Bereitstellen zumindest einer Zumischvorrichtung (9),
- Zuführen der bereitgestellten und zu behandelnden Biomasse (5) in die Trocknungsvorrichtung (4), wobei die in der Biomasse (5) enthaltene Feuchtigkeit reduziert und weiters beim Trocknungsvorgang aus der Biomasse (5) Ammoniak (NH₃) freigesetzt wird,
- Abgeben der zu behandelnden Biomasse (5) aus der Trocknungsvorrichtung (4),
- Zuführen der zu behandelnden Biomasse (5) in den zumindest einen Verbrennungs-Reaktor (18, 19),
- Verbrennen der Biomasse (5) im zumindest einen Verbrennungs-Reaktor (18, 19) und dabei oxidative Umsetzung der Biomasse (5) in ein Verbrennungsprodukt und Rauchgas,
- Abführen des Verbrennungsprodukts und Ableiten des Rauchgases aus dem zumindest einen Verbrennungs-Reaktor (18, 19),
- Zuleiten des Rauchgases in die Zumischvorrichtung (9),
- Zudosieren von Sauerstoff (O₂) und/oder zumindest eines Sauerstoff (O₂) enthaltenden Gases zum Rauchgas in der Zumischvorrichtung (9) und Bildung eines Trocknungsgases, welches Trocknungsgas unter anderem Schwefeldioxid (SO₂) und/oder Schwefeltrioxid (SO₃) jeweils in einem gasförmigen Aggregatzustand enthält,
- Ableiten des Trocknungsgases aus der Zumischvorrichtung (9) und Zuleiten des Trocknungsgases in die Trocknungsvorrichtung (4),
- Hindurchleiten des Trocknungsgases durch die Trocknungsvorrichtung (4), wobei das im Trocknungsgas unter anderem enthaltene Schwefeldioxid (SO₂) und/oder das Schwefeltrioxid (SO₃) mit dem Ammoniak (NH₃) chemisch zu Ammoniumsulfit ((NH₄)₂SO₃) und/oder Ammoniumsulfat ((NH₄)₂SO₄) reagiert.

15. Verfahren nach Anspruch 14, **dadurch gekennzeichnet, dass** die Verbrennungs-Anlageneinheit (17) aus mehreren Verbrennungs-Reaktoren (18, 19) gebildet wird und dass das jeweils bei der Verbrennung in diesen gebildete Rauchgas der Zumischvorrichtung (9) zugeleitet wird.

16. Verfahren nach Anspruch 14 oder 15, **dadurch gekennzeichnet, dass** das Trocknungsgas in der Zumischvorrichtung (9) auf einen Temperaturwert verbracht wird, der aus einem Temperatur-Wertebereich stammt, dessen untere Grenze 100°C, insbesondere 300°C, und dessen obere Grenze 700 °C, insbesondere 500 °C, beträgt.

17. Verfahren nach einem der Ansprüche 14 bis 16, **dadurch gekennzeichnet, dass** das Trocknungsgas in der Zumischvorrichtung (9) durch das Zudosieren des Sauerstoffs (O₂) und/oder zumindest des den Sauerstoff (O₂) enthaltenden Gases auf einen Sauerstoffgehalt verbracht wird, der aus einem Sauerstoffgehalt-Wertebereich stammt, dessen untere Grenze 6 Vol.%, insbesondere 15 Vol.%, und dessen obere Grenze 20 Vol.%, insbesondere 17 Vol.%, beträgt.

18. Verfahren nach einem der Ansprüche 14 bis 17, **dadurch gekennzeichnet, dass** von dem aus der Verbrennungs-Anlageneinheit (17) abgeleiteten Rauchgas eine Teilmenge vor dem Zuleiten in die Zumischvorrichtung (9) abgezweigt wird, diese Teilmenge des Rauchgases durch einen Wärmetauscher (14) hindurchgeleitet und die Rauchgastemperatur reduziert wird und nachfolgend das abgezweigte Rauchgas der Verbrennungs-Anlageneinheit (17) zur Verbrennung zugeleitet wird.

19. Verfahren nach Anspruch 18, **dadurch gekennzeichnet, dass** Umgebungsluft als das den Sauerstoff (O₂) enthaltende Gas durch den Wärmetauscher (14) hindurchgeleitet und die Temperatur mittels des hindurchgeleiteten Rauchgases erhöht wird und nachfolgend die Umgebungsluft der Zumischvorrichtung (9) zugeleitet und dem Rauchgas zudosiert wird.

20. Verfahren nach einem der Ansprüche 14 bis 19, **dadurch gekennzeichnet, dass** das in der Trocknungsvorrichtung (4) gebildete Ammoniumsulfit ((NH₄)₂SO₃) und/oder das Ammoniumsulfat ((NH₄)₂SO₄) gemeinsam mit der getrockneten Biomasse (5) der Verbrennungs-Anlageneinheit (17) zugeführt werden oder wird.

21. Behandlungsanlage (1) zur physikalischen und thermo-chemischen Behandlung von Biomasse (5), insbesondere von organischen Abfallprodukten, wie Schlämme aus Kläranlagen, Schlachtbetrieben, landwirtschaftlichen Betrieben, der Tierhaltung, Lebensmittelindustrie, Papierindustrie, insbesondere zur Durchführung des Verfahrens nach einem der Ansprüche 14 bis 20, die Behandlungsanlage (1) umfasst
- eine Trocknungsvorrichtung (4), welche Trocknungsvorrichtung (4) dazu ausgebildet ist, die in der Biomasse (5) enthaltene Feuchtigkeit zu reduzieren, und wobei weiters beim Trocknungsvorgang in der Trocknungsvorrichtung (4) Ammoniak (NH₃) aus der Biomasse (5) freisetzbar ist,
- eine Verbrennungs-Anlageneinheit (17) mit zumindest einem Verbrennungs-Reaktor (18, 19), welcher zumindest eine Verbrennungs-Reaktor (18, 19) dazu ausgebildet ist, die diesem zugeführte Biomasse (5) zu verbrennen und dabei eine oxidative Umsetzung der Biomasse (5) in ein Verbrennungsprodukt und Rauchgas durchzuführen,
- zumindest eine Zumischvorrichtung (9), welche Zumischvorrichtung (9) dazu ausgebildet ist, ein Zudosieren von Sauerstoff (O₂) und/oder zumindest eines Sauerstoff (O₂) enthaltenden Gases zu dem der Zumischvorrichtung (9) aus der Verbrennungs-Anlageneinheit (17) zugeleiteten Rauchgas zur Bildung eines Trocknungsgases durchzuführen, wobei das mittels der Zumischvorrichtung (9) gebildete Trocknungsgas unter anderem Schwefeldioxid (SO₂) und/oder Schwefeltrioxid (SO₃) jeweils in einem gasförmigen Aggregatzustand enthält,
- eine Trocknungsgas-Zuleitung, mittels welcher Trocknungsgas-Zuleitung die zumindest eine Zumischvorrichtung (9) mit der Trocknungsvorrichtung (4) in Leitungsverbindung steht und dazu ausgebildet ist, das in der Zumischvorrichtung (9) gebildete Trocknungsgas der Trocknungsvorrichtung (4) zuzuleiten.

22. Behandlungsanlage (1) nach Anspruch 21, **dadurch gekennzeichnet, dass** die Verbrennungs-Anlageneinheit (17) mehrere Verbrennungs-Reaktoren (18, 19) umfasst und jeder der Verbrennungs-Reaktoren (18, 19) mit der Zumischvorrichtung (9) in Leitungsverbindung steht.

23. Behandlungsanlage (1) nach Anspruch 21 oder 22, **dadurch gekennzeichnet, dass** der zumindest eine Verbrennungs-Reaktor (18, 19) aus der Gruppe von Drehrohrofen, Wirbelschichtofen, Ofen zur Durchführung einer Staubfeuerung oder einer Zykloidfeuerung oder einem Ofen mit Rostfeuerung, wie einem Treppenofen, gewählt ist.

24. Behandlungsanlage (1) nach einem der Ansprüche 21 bis 23, **dadurch gekennzeichnet, dass** diese weiters ein Blockheizkraftwerk (12) umfasst und ein aus dem Blockheizkraftwerk (12) stammendes weiters Rauchgas via eine Zuleitung der Zumischvorrichtung (9) zuleitbar ist.

## Claims

1. A method for the physical and thermochemical treatment of biomass (5), in particular of organic waste products, such as sludge from sewage treatment plants, slaughterhouses, agricultural operations, animal husbandry, the food industry, the paper industry, in which the following steps are performed in a treatment facility (1):
- providing the biomass (5) to be treated,
- providing a drying device (4),
- providing at least one pyrolysis reactor (2),
- providing at least one combustion device (3),
- providing at least one mixing device (9),
- feeding the provided biomass (5) to be treated into the drying device (4), wherein the moisture contained in the biomass (5) is reduced and ammonia (NH₃) is released from the biomass (5) during the drying process,
- discharging the biomass (5) to be treated from the drying device (4),
- feeding the biomass (5) to be treated into the pyrolysis reactor (2),
- pyrolyzing the biomass (5) in the pyrolysis reactor (2) and, in the course of this, thermally decomposing the biomass (5) into pyrolysis coke and pyrolysis gas,
- discharging the pyrolysis coke and discharging the pyrolysis gas from the pyrolysis reactor (2),
- feeding the pyrolysis gas discharged from the pyrolysis reactor (2) into the combustion device (3) and combusting the pyrolysis gas thus forming a flue gas,
- discharging the flue gas from the combustion device (3) and feeding the flue gas into the mixing device (9),
- adding oxygen (O₂) and or at least an oxygen (O₂)-containing gas to the flue gas in the mixing device (9) and forming a drying gas, said drying gas containing, inter alia, sulfur dioxide (SO₂) and/or sulfur trioxide (SO₃), each in a gaseous aggregate state,
- discharging the drying gas from the mixing device (9) and feeding the drying gas into the drying device (4),
- guiding the drying gas through the drying device (4), wherein the sulfur dioxide (SO₂) and/or the sulfur trioxide (SO₃), which is inter alia contained in the drying gas, chemically reacts with the ammonia (NH₃) to ammonium sulfite ((NH₄)₂SO₃) and/or ammonium sulfate ((NH₄)₂SO₄).

2. The method according to claim 1, **characterized in that** the drying gas is brought to a temperature value in the mixing device (9), which is in a temperature value range the lower limit of which is 100°C, in particular 300°C, and the upper limit of which is 700 °C, in particular 500 °C.

3. The method according to claim 1 or 2, **characterized in that** the drying gas in the mixing device (9) is brought to an oxygen content in an oxygen content value range the lower limit of which is 6 vol%, in particular 15 vol%, and the upper limit of which is 20 vol%, in particular 17 vol%, by adding the oxygen (O₂) and/or at least the oxygen (O₂)-containing gas.

4. The method according to one of the preceding claims, **characterized in that** a further flue gas originating from a block-type thermal power station (12) is fed to the mixing device (9).

5. The method according to claim 4, **characterized in that** the further flue gas is fed to the mixing device (9) with a temperature value, which is in a temperature value range the lower limit of which is 100°C, in particular 200°C, and the upper limit of which is 500 °C, in particular 300 °C.

6. The method according to one of the preceding claims, **characterized in that** a partial quantity of the flue gas discharged from the combustion device (3) is branched off before being fed into the mixing device (9), this partial quantity of the flue gas is passed through a heat exchanger (14) and the flue gas temperature is reduced, and subsequently the branched-off flue gas is fed to the combustion device (3) for combustion.

7. The method according to claim 6, **characterized in that** ambient air is passed through the heat exchanger (14) as the oxygen (O₂)-containing gas and the temperature is raised by means of the flue gas passed through and the ambient air is subsequently fed to the mixing device (9) and metered into the flue gas.

8. The method according to one of the preceding claims, **characterized in that** the pyrolysis coke discharged from the pyrolysis reactor (2) is fed to a provided coke treatment device (10) and is further decomposed in the coke treatment device (10) into a solid, in particular free-flowing, residue product and into a coke exhaust gas.

9. The method according to claim 8, **characterized in that** the residue product is discharged from the coke treatment device (10) being spatially separated from the coke exhaust gas.

10. The method according to claim 8 or 9, **characterized in that** the coke exhaust gas discharged from the coke treatment device (10) is fed into the combustion device (3) and the coke exhaust gas is combusted in the combustion device (3) thus forming a flue gas and is also discharged therefrom.

11. The method according to one of claims 8 to 10, **characterized in that** the pyrolysis gas and the coke exhaust gas are fed into the combustion device (3) separately from one another.

12. The method according to one of claims 8 to 10, **characterized in that** the pyrolysis gas and the coke exhaust gas are fed into the combustion device (3) together.

13. The method according to one of the preceding claims, **characterized in that** the ammonium sulfite ((NH₄)₂SO₃) and/or the ammonium sulfate ((NH₄)₂SO₄) formed in the drying device (4) is or are fed to the pyrolysis reactor (2) together with the dried biomass (5).

14. A method for the physical and thermochemical treatment of biomass (5), in particular of organic waste products, such as sludge from sewage treatment plants, slaughterhouses, agricultural operations, animal husbandry, the food industry, the paper industry, in which the following steps are performed in a treatment facility (1):
- providing the biomass (5) to be treated,
- providing a drying device (4),
- providing a combustion facility unit (17) with at least one combustion reactor (18, 19),
- providing at least one mixing device (9),
- feeding the provided biomass (5) to be treated into the drying device (4), wherein the moisture contained in the biomass (5) is reduced and ammonia (NH₃) is released from the biomass (5) during the drying process,
- discharging the biomass (5) to be treated from the drying device (4),
- feeding the biomass (5) to be treated into the at least one combustion reactor (18, 19),
- combusting the biomass (5) in the at least one combustion reactor (18, 19) and, in the course of this, oxidatively converting the biomass (5) into a combustion product and flue gas,
- discharging the combustion product and discharging the flue gas from the at least one combustion reactor (18, 19),
- feeding the flue gas into the mixing device (9),
- adding oxygen (O₂) and or at least an oxygen (O₂)-containing gas to the flue gas in the mixing device (9) and forming a drying gas, said drying gas containing, inter alia, sulfur dioxide (SO₂) and/or sulfur trioxide (SO₃), each in a gaseous aggregate state,
- discharging the drying gas from the mixing device (9) and feeding the drying gas into the drying device (4),
- guiding the drying gas through the drying device (4), wherein the sulfur dioxide (SO₂) and/or the sulfur trioxide (SO₃), which is inter alia contained in the drying gas, chemically reacts with the ammonia (NH₃) to ammonium sulfite ((NH₄)₂SO₃) and/or ammonium sulfate ((NH₄)₂SO₄).

15. The method according to claim 14, **characterized in that** the combustion facility unit (17) is formed of multiple combustion reactors (18, 19) and that the flue gas in each case formed in these during the combustion is fed to the mixing device (9).

16. The method according to claim 14 or 15, **characterized in that** the drying gas is brought to a temperature value in the mixing device (9), which is in a temperature value range the lower limit of which is 100°C, in particular 300°C, and the upper limit of which is 700 °C, in particular 500 °C.

17. The method according to one of claims 14 to 16, **characterized in that** the drying gas in the mixing device (9) is brought to an oxygen content in an oxygen content value range the lower limit of which is 6 vol%, in particular 15 vol%, and the upper limit of which is 20 vol%, in particular 17 vol%, by adding the oxygen (O₂) and/or at least the oxygen (O₂)-containing gas.

18. The method according to one of claims 14 to 17, **characterized in that** a partial quantity of the flue gas discharged from the combustion facility unit (17) is branched off before being fed into the mixing device (9), this partial quantity of the flue gas is passed through a heat exchanger (14) and the flue gas temperature is reduced, and subsequently the branched-off flue gas is fed to the combustion facility unit (17) for combustion.

19. The method according to claim 18, **characterized in that** ambient air is passed through the heat exchanger (14) as the oxygen (O₂)-containing gas and the temperature is raised by means of the flue gas passed through and the ambient air is subsequently fed to the mixing device (9) and metered into the flue gas.

20. The method according to one of claims 14 to 19, **characterized in that** the ammonium sulfite ((NH₄)₂SO₃) and/or the ammonium sulfate ((NH₄)₂SO₄) formed in the drying device (4) is or are fed to the combustion facility unit (17) together with the dried biomass (5).

21. A treatment facility (1) for the physical and thermochemical treatment of biomass (5), in particular of organic waste products, such as sludge from sewage treatment plants, slaughterhouses, agricultural operations, animal husbandry, the food industry, the paper industry, in particular for performing the method according to one of claims 14 to 20, the treatment facility (1) comprising
- a drying device (4), said drying device (4) being configured to reduce the moisture contained in the biomass (5), and wherein, further, ammonia (NH₃) can be released from the biomass (5) during the drying process in the drying device (4),
- a combustion facility unit (17) with at least one combustion reactor (18, 19), said at least one combustion reactor (18, 19) being configured to combust the biomass (5) fed to it, and, in the course of this, oxidatively convert the biomass (5) into a combustion product and flue gas,
- at least one mixing device (9), said mixing device (9) being configured to perform an addition of oxygen (O₂) and/or at least one oxygen (O₂)-containing gas to the flue gas fed to the mixing device (9) from the combustion facility unit (17) to form a drying gas, wherein the drying gas formed by means of the mixing device (9) contains, inter alia, sulfur dioxide (SO₂) and/or sulfur trioxide (SO₃), each in a gaseous aggregate state,
- a drying gas supply line, by means of which drying gas supply line the at least one mixing device (9) is in line connection with the drying device (4), and which is configured to supply the drying gas formed in the mixing device (9) to the drying device (4).

22. The treatment facility (1) according to claim 21, **characterized in that** the combustion facility unit (17) comprises multiple combustion reactors (18, 19) and each one of the combustion reactors (18, 19) is in line connection with the mixing device (9).

23. The treatment facility (1) according to claim 21 or 22, **characterized in that** the at least one combustion reactor (18, 19) is selected from the group of a rotary kiln, a fluidized bed furnace, a furnace for carrying out dust firing or cycloid firing, or a furnace with grate firing, such as a stair kiln.

24. The treatment facility (1) according to one of claims 21 to 23, **characterized in that** it further comprises a block-type thermal power station (12) and a further flue gas originating from the block-type thermal power station (12) can be supplied to the mixing device (9) via a supply line.

## Revendications

1. Procédé de traitement physique et thermochimique d'une biomasse (5), plus particulièrement de déchets organiques, comme des boues provenant d'installation d'épuration, d'abattoirs, d'exploitations agricoles, d'élevages, de l'industrie alimentaire, de l'industrie papetière, dans lequel les étapes suivantes sont exécutées dans une installation de traitement (1) :
- mise à disposition de la biomasse à traiter (5),
- mise à disposition d'un dispositif de séchage (4),
- mise à disposition d'au moins un réacteur à pyrolyse (2),
- mise à disposition d'un dispositif de combustion (3),
- mise à disposition d'au moins un dispositif de mélange (9),
- introduction de la biomasse (5) mise à disposition et à traiter dans le dispositif de séchage (4), dans lequel l'humidité contenue dans la biomasse (5) est réduite et en outre, lors du processus de séchage, de l'ammoniac (NH₃) est dégagé par la biomasse (5),
- évacuation de la biomasse à traiter (5) hors du dispositif de séchage (4),
- introduction de la biomasse à traiter (5) dans le réacteur à pyrolyse (2),
- pyrolyse de la biomasse (5) dans le réacteur à pyrolyse (2) est décomposition thermique de la biomasse (5) en coke de pyrolyse et en gaz de pyrolyse,
- évacuation du coke de pyrolyse et sortie du gaz de pyrolyse hors du réacteur de pyrolyse (2),
- introduction du gaz de pyrolyse provenant du réacteur à pyrolyse (2) dans le dispositif de combustion (3) et combustion du gaz de pyrolyse avec la formation d'un gaz de combustion,
- évacuation du gaz de combustion hors du dispositif de combustion (3) et introduction du gaz de combustion dans le dispositif de mélange (9),
- ajout d'oxygène (O₂) et/ou d'au moins un gaz contenant de l'oxygène (O₂) au gaz de combustion dans le dispositif de mélange (9) et formation d'un gaz de séchage, ce gaz de séchage contenant entre autres du dioxyde de soufre (SO₂) et/ou du trioxyde de soufre (SO₃), respectivement sous forme gazeuse,
- évacuation du gaz de séchage hors du dispositif de mélange (9) et introduction du gaz de séchage dans le dispositif de séchage (4),
- guidage du gaz de séchage à travers le dispositif de séchage (4), dans lequel le dioxyde de soufre (SO₂) et/ou le trioxyde de soufre (SO₃) contenu, entre autres, dans le gaz de séchage, réagit chimiquement avec l'ammoniac (NH₃), afin d'obtenir du sulfite d'ammonium ((NH₄)₂SO₃) et/ou du sulfate d'ammonium ((NH₄)₂SO₄).

2. Procédé selon la revendication 1, **caractérisé en ce que** le gaz de séchage est porté, dans le dispositif de mélange (9), à une valeur de température qui se trouve dans une plage de valeurs de température dont la limite inférieure est de 100 °C, plus particulièrement de 300 °C et dont la limite supérieure est de 700 °C, plus particulièrement de 500 °C.

3. Procédé selon la revendication 1 ou 2, **caractérisé en ce que** le gaz de séchage est porté, grâce à l'ajout de l'oxygène (O₂) et/ou d'au moins un gaz contenant de l'oxygène (O₂), à une teneur en oxygène qui se trouve dans une plage de valeurs de teneur en oxygène dont la limite inférieure est de 6 % en volume, plus particulièrement de 15 % en volume et dont la limite supérieure est de 20 % en volume, plus particulièrement de 17 % en volume.

4. Procédé selon l'une des revendications précédentes, **caractérisé en ce que**, dans le dispositif de mélange (9), est introduit un gaz de combustion supplémentaire provenant d'une centrale de cogénération (12).

5. Procédé selon la revendication 4, **caractérisé en ce que** le gaz de combustion supplémentaire est introduit dans le dispositif de mélange (9) avec une valeur de température qui se trouve dans une plage de valeurs de température dont la limite inférieure est de 100 °C, plus particulièrement de 200 °C et dont la limite supérieure est de 500 °C, plus particulièrement de 300 °C.

6. Procédé selon l'une des revendications précédentes, **caractérisé en ce que**, du gaz de combustion évacué hors du dispositif de combustion (3), est déviée une quantité partielle, avant l'introduction dans le dispositif de mélange (9), cette quantité partielle de gaz de combustion étant guidée à travers un échangeur thermique (14) et la température du gaz de combustion est réduite puis le gaz de combustion dévié est introduit dans le dispositif de combustion (3) pour la combustion.

7. Procédé selon la revendication 6, **caractérisé en ce que** de l'air ambiant est guidé, en tant que gaz contenant de l'oxygène (O₂), à travers l'échangeur thermique (14) et la température est augmentée au moyen du gaz de combustion guidé à travers celui-ci puis l'air ambiant est introduit dans le dispositif de mélange (9) et ajouté au gaz de combustion.

8. Procédé selon l'une des revendications précédentes, **caractérisé en ce que** le coke de pyrolyse évacué hors du réacteur à pyrolyse (2) est introduit dans un dispositif de traitement de coke (10) mis à disposition et, dans le dispositif de traitement de coke (10), il est décomposé en produit résiduel solide, plus particulièrement à écoulement libre, et en un gaz d'échappement de coke.

9. Procédé selon la revendication 8, **caractérisé en ce que** le produit résiduel est évacué de manière séparée physiquement du gaz d'échappement de coke hors du dispositif de traitement de coke (10).

10. Procédé selon la revendication 8 ou 9, **caractérisé en ce que** le gaz d'échappement de coke évacué hors du dispositif de traitement de coke (10) est introduit dans le dispositif de combustion (3) et le gaz d'échappement de coke est brûlé dans le dispositif de combustion (3) en formant le gaz de combustion et est également évacué hors de celui-ci.

11. Procédé selon l'une des revendications 8 à 10, **caractérisé en ce que** le gaz de pyrolyse et le gaz d'échappement de coke sont introduits séparément dans le dispositif de combustion (3).

12. Procédé selon l'une des revendications 8 à 10, **caractérisé en ce que** le gaz de pyrolyse et le gaz d'échappement de coke sont introduits ensemble dans le dispositif de combustion (3).

13. Procédé selon l'une des revendications précédentes, **caractérisé en ce que** le sulfite d'ammonium ((NH₄)₂SO₃) et/ou le sulfate d'ammonium ((NH₄)₂SO₄) formés dans le dispositif de séchage (4) sont introduits conjointement avec la biomasse (5) séchée dans le réacteur à pyrolyse (2).

14. Procédé de traitement physique et thermochimique d'une biomasse (5), plus particulièrement de déchets organiques, comme des boues provenant d'installation d'épuration, d'abattoirs, d'exploitations agricoles, d'élevages, de l'industrie alimentaire, de l'industrie papetière, dans lequel les étapes suivantes sont exécutées dans une installation de traitement (1) :
- mise à disposition de la biomasse à traiter (5),
- mise à disposition d'un dispositif de séchage (4),
- mise à disposition d'une unité d'installation de combustion (17) avec au moins un réacteur de combustion (18, 19),
- mise à disposition d'au moins un dispositif de mélange (9),
- introduction de la biomasse (5) mise à disposition et à traiter dans le dispositif de séchage (4), dans lequel l'humidité contenue dans la biomasse (5) est réduite et en outre, lors du processus de séchage, de l'ammoniac (NH₃) est dégagé par la biomasse (5),
- évacuation de la biomasse à traiter (5) hors du dispositif de séchage (4),
- introduction de la biomasse à traiter (5) dans l'au moins un réacteur de combustion (18, 19),
- combustion de la biomasse (5) dans l'au moins un réacteur de combustion (18, 19) et transformation oxydative de la biomasse (5) en un produit de combustion et un gaz de combustion,
- évacuation du produit de combustion et sortie du gaz de combustion hors de l'au moins un réacteur de combustion (18, 19),
- introduction du gaz de combustion dans le dispositif de mélange (9),
- ajout d'oxygène (O₂) et/ou d'au moins un gaz contenant de l'oxygène (O₂) au gaz de combustion dans le dispositif de mélange (9) et formation d'un gaz de séchage, ce gaz de séchage contenant entre autres du dioxyde de soufre (SO₂) et/ou du trioxyde de soufre (SO₃), respectivement sous forme gazeuse,
- évacuation du gaz de séchage hors du dispositif de mélange (9) et introduction du gaz de séchage dans le dispositif de séchage (4),
- guidage du gaz de séchage à travers le dispositif de séchage (4), dans lequel le dioxyde de soufre (SO₂) et/ou le trioxyde de soufre (SO₃) contenu, entre autres, dans le gaz de séchage, réagit chimiquement avec l'ammoniac (NH₃), afin d'obtenir du sulfite d'ammonium ((NH₄)₂SO₃) et/ou du sulfate d'ammonium ((NH₄)₂SO₄).

15. Procédé selon la revendication 14, **caractérisé en ce que** l'unité d'installation de combustion (17) est constituée de plusieurs réacteurs de combustion (18, 19) et **en ce que** le gaz de combustion formé respectivement dans ceux-ci lors de la combustion est introduit dans le dispositif de mélange (9).

16. Procédé selon la revendication 14 ou 15, **caractérisé en ce que** le gaz de séchage est porté, dans le dispositif de mélange (9), à une valeur de température qui se trouve dans une plage de valeurs de température dont la limite inférieure est de 100 °C, plus particulièrement de 300 °C et dont la limite supérieure est de 700 °C, plus particulièrement de 500 °C.

17. Procédé selon l'une des revendications 14 à 16, **caractérisé en ce que** le gaz de séchage dans le dispositif de mélange (9) est porté, grâce à l'ajout de l'oxygène (O₂) et/ou d'au moins un gaz contenant de l'oxygène (O₂), à une teneur en oxygène qui se trouve dans une plage de valeurs de teneur en oxygène dont la limite inférieure est de 6 % en volume, plus particulièrement de 15 % en volume et dont la limite supérieure est de 20 % en volume, plus particulièrement de 17 % en volume.

18. Procédé selon l'une des revendications 14 à 17, **caractérisé en ce que**, du gaz de combustion évacué hors de l'unité d'installation de combustion (17), est déviée une quantité partielle, avant l'introduction dans le dispositif de mélange (9), cette quantité partielle de gaz de combustion étant guidée à travers un échangeur thermique (14) et la température du gaz de combustion est réduite puis le gaz de combustion dévié est introduit dans l'unité d'installation de combustion (17) pour la combustion.

19. Procédé selon la revendication 18, **caractérisé en ce que** de l'air ambiant est guidé, en tant que gaz contenant de l'oxygène (O₂), à travers l'échangeur thermique (14) et la température est augmentée au moyen du gaz de combustion guidé à travers celui-ci puis l'air ambiant est introduit dans le dispositif de mélange (9) et ajouté au gaz de combustion.

20. Procédé selon l'une des revendications 14 à 19, **caractérisé en ce que** le sulfite d'ammonium ((NH₄)₂SO₃) et/ou le sulfate d'ammonium ((NH₄)₂SO₄) formés dans le dispositif de séchage (4) sont introduits conjointement avec la biomasse (5) séchée dans l'unité d'installation de combustion (17).

21. Installation de traitement (1) pour le traitement physique et thermochimique d'une biomasse (5), plus particulièrement de déchets organiques, comme des boues provenant d'installation d'épuration, d'abattoirs, d'exploitations agricoles, d'élevages, de l'industrie alimentaire, de l'industrie papetière, plus particulièrement pour l'exécution du procédé selon l'une des revendications 14 à 20, cette installation de traitement (1) comprenant :
- un dispositif de séchage (4), ce dispositif de séchage (4) étant conçu pour réduire l'humidité contenue dans la biomasse (5) et dans lequel, en outre, lors du processus de séchage, dans le dispositif de séchage (4), de l'ammoniac (NH₃) peut être dégagé par la biomasse (5),
- une unité d'installation de combustion (17) avec au moins un réacteur de combustion (18, 19), cet au moins un réacteur de combustion (18, 19) étant conçu pour brûler la biomasse (5) introduite dans celui-ci et effectuer ainsi une transformation oxydative de la biomasse (5) en un produit de combustion et en gaz de combustion,
- au moins un dispositif de mélange (9), ce dispositif de mélange (9) étant conçu pour effectuer un ajout d'oxygène (O₂) et/ou d'au moins un gaz contenant de l'oxygène (O₂) au gaz de combustion introduit dans le dispositif de mélange (9) à partir de l'unité d'installation de combustion (17), afin de former un gaz de séchage, dans lequel le gaz de séchage formé au moyen du dispositif de mélange (9) contient, entre autres du dioxyde de soufre (SO₂) et/ou du trioxyde de soufre (SO₃), respectivement sous forme gazeuse,
- une conduite d'introduction de gaz de séchage, cette conduite d'introduction de gaz de séchage reliant l'au moins un dispositif de mélange (9) avec le dispositif de séchage (4) et étant conçue pour introduire le gaz de séchage formé dans le dispositif de mélange (9) dans le dispositif de séchage (4).

22. Installation de traitement (1) selon la revendication 21, **caractérisé en ce que** l'unité d'installation de combustion (17) comprend plusieurs réacteurs de combustion (18, 19) et chacun des réacteurs de combustion (18, 19) étant relié avec le dispositif de mélange (9).

23. Installation de traitement (1) selon la revendication 21 ou 22, **caractérisé en ce que** l'au moins un réacteur de combustion (18, 19) est sélectionné dans le groupe constitué d'un four tubulaire rotatif, d'un four à lit fluidisé, d'un four pour la réalisation d'une combustion de poussières ou une combustion cycloïde ou d'un four avec combustion sur grille, comme un four à escalier.

24. Installation de traitement (1) selon l'une des revendications 21 à 23, **caractérisé en ce que** celle-ci comprend en outre une centrale de cogénération (12) et un gaz de combustion supplémentaire provenant de la centrale de cogénération (12) peut être introduit par l'intermédiaire d'une conduite d'introduction dans le dispositif de mélange (9).
